# FASCICULE DE BREVET EUROPEEN

(11) **EP 3 380 987 B1**
(45) Date de publication et mention de la délivrance du brevet: **10.04.2024**
(21) Numéro de dépôt: 16815892.1
(22) Date de dépôt: 28.11.2016
(51) Int. Cl.: G06V 20/80

(54) **PROCEDE D'AUTHENTIFICATION ET/OU DE CONTROLE D'INTEGRITE D'UN SUJET**
VERFAHREN ZUR AUTHENTIFIZIERUNG UND/ODER ÜBERPRÜFUNG DER INTEGRITÄT EINER PERSON
METHOD FOR AUTHENTICATING AND/OR CHECKING THE INTEGRITY OF A SUBJECT

(30) Priorité: 27.11.2015 FR 1561527; 20.02.2016 FR 1670055
(43) Date de publication de la demande: 03.10.2018
(73) Titulaire: Kerquest, 73310 Chindrieux (FR)
(72) Inventeur: BOUTANT, Yann, 73310 Chindrieux (FR); FOURNEL, Thierry, 42330 Saint-Galmier (FR)
(74) Mandataire: Atout PI Laplace
(86) Numéro de dépôt international: PCT/FR2016/053125
(87) Numéro de publication internationale: WO 2017/089736

(56) Documents cités:
- US-A- 5 982 932
- US-A1- 2004 001 604
- Naoyuki Osaka Et Al: "Object Recognition Attention and Action" In: "Object Recognition Attention and Action", 1 janvier 2007 (2007-01-01), Springer, XP055314972, page 163, le document en entier
- Michael R. M. Jenkin et L.R. Harris: "Seeing Spatial Form", 1 janvier 2006 (2006-01-01), Oxford University Press, XP055314968, page 51, le document en entier

## Description

La présente invention concerne le domaine technique de l'authentification et du contrôle d'intégrité de sujets matériels ainsi que le domaine de la cryptographie visuelle. Dans une application préférée mais non exclusive, l'invention concerne le domaine de l'authentification unitaire de sujets matériels.

Dans le domaine ci-dessus il est connu, notamment d'un brevet US 4 423 415, de procéder à l'identification de sujets matériels en procédant à l'extraction d'une signature d'une région dite d'authentification comprenant une micro structure intrinsèque tridimensionnelle essentiellement aléatoire. Cette extraction est généralement réalisée avec des moyens de calcul électroniques tels qu'un ordinateur et nécessitent pour la vérification de l'authenticité d'un sujet de mettre à nouveau en oeuvre de tels moyens de calcul. Ainsi, selon certaines méthodes connues, il est procédé à une première extraction de la signature de la région d'authentification pour procéder à l'enregistrement d'une signature d'authentification. Ensuite, lors de la vérification de l'authenticité, il est procédé à l'extraction d'une deuxième signature, dite de vérification, de la même région d'authentification puis il est procédé une comparaison des signatures d'authentification et de vérification pour déterminer l'authenticité en fonction d'un seuil de similarité des signatures. Selon d'autres méthodes connues, il est procédé au calcul d'un coefficient de similarité ou de corrélation entre une image d'authentification préalablement enregistrée et une image de vérification acquise au moment de la vérification de l'authenticité pour, en fonction de la valeur du coefficient de corrélation ou de similarité, conclure ou non à l'authenticité du sujet.

De telles méthodes si elles permettent effectivement des authentifications présentant un risque très faible de conclure à l'authenticité d'un sujet non authentique, présentent néanmoins l'inconvénient de nécessiter des calculs et les ressources correspondantes tant lors de la phase d'enregistrement que lors de la phase de vérification. De plus, l'opérateur ou l'être humain est exclu du processus de validation de l'authenticité de sorte que l'opérateur doit faire confiance aveuglement au système de calcul en ce qui concerne le processus de validation de l'authenticité. Par ailleurs, il existe toujours un risque que le système de calcul puisse être piraté ou modifié frauduleusement de manière à fournir un résultat concluant à l'authenticité alors que cela n'est pas le cas.

Il est également connu des méthodes qui ont proposé, dans une phase d'enregistrement, d'enregistrer une image d'authentification à un fort grossissement ou grandissement d'une région d'authentification du sujet matériel à authentifier de manière à permettre l'observation de détails microscopiques de cette région d'authentification. Ces méthodes proposent alors dans une phase de vérification de faire observer par un opérateur au même grossissement ou grandissement une image de vérification de la région d'authentification sur le sujet à authentifier de manière que l'opérateur puisse effectuer une comparaison visuelle des deux images juxtaposées pour identifier les régions identiques ou les régions différentes et conclure ou non à l'authenticité du sujet à authentifier. Si une telle méthode ou procédé permet une authentification qui ne requiert pas de moyens de calcul puisque l'authentification résulte d'une comparaison visuelle effectuée par un opérateur, cette méthode visuelle présente l'inconvénient majeur de nécessiter une longue formation préalable de l'opérateur et/ou une durée d'observation relativement longue pour que l'opérateur puisse conclure à l'authenticité ou non avec un degré de confiance en soi et une certitude satisfaisants. De plus, ces méthodes mettent en oeuvre la mémoire explicite de l'opérateur, mémoire qui est très variable d'un individu à l'autre.

Les méthodes d'authenfication visuelle selon US20040011604 et selon US5982932 permettent à un observateur humain d'observer un motif de Glass, mais elles nécessitent l'adjonction à la région d'authentification d'une structure permettant de générer un motif de Glass par superposition d'images de cette structure particulière.

Il est donc apparu le besoin d'un nouveau procédé d'authentification visuelle qui, tout en ne requérant pas ou peu de moyens de calcul pour la phase finale de décision quant à l'authenticité en mettant à profit les performances du système visuel humain d'un opérateur, permette à cet opérateur de conclure à l'authenticité avec un temps d'observation réduit par rapport aux procédés connus et offre à l'opérateur des moyens d'avoir confiance dans son jugement. Au sens de l'invention est visuel ce qui se rapporte à la vision naturelle ou artificielle.

Afin d'atteindre cet objectif, l'invention concerne, un procédé d'authentification visuelle et/ou de contrôle d'intégrité visuel selon la revendication 1 ou selon la revendication 5.

En ce qui concerne la région d'authentification, selon l'invention, son image ou représentation visuelle par le système visuel humain (en abrégé SVH) possède une texture qu'un observateur d'acuité visuelle moyenne peut observer soit à l'œil nu soit via un zoom réalisé optiquement et/ou numériquement. Ainsi, l'observation de structures de petites dimensions ou perçues comme de petites dimensions par le SVH au grandissement d'observation sont perçues par le SVH comme des images contenant une texture. C'est le cas par exemple de grains de sables : observés à l'œil nu à plusieurs dizaines de centimètres de distance, ils sont perçus comme étant de petites dimensions alors qu'observés à la loupe ils sont perçus comme des objets de dimensions moyennes. De même, une prairie observée à plusieurs dizaines de mètres est perçue comme étant uniforme ou étant constituées d'une structure de très petits éléments indiscernables tandis que lors d'une observation à quelques dizaines de centimètres il est possible pour un observateur de percevoir les brins d'herbe. Le même phénomène est perceptible en ce qui concerne une plage de galets selon la distance d'observation.

Dans le cadre de l'invention le terme texture se rapporte à ce qui est perceptible par le SVH comme un signal ou une zone homogène dans une image issue d'une observation directe ou via un système optique ou encore via un système d'acquisition d'image muni au moins de moyens d'affichage tandis que le terme structure se rapporte à la composition et l'organisation de la matière constitutive du sujet lui-même. La texture d'intérêt de la région d'authentification est qualifiée de texture à composante aléatoire en ce qu'elle comprend au moins une partie ou une certaine proportion d'aléa ou d'irrégularité. Pour illustrer, l'image d'un sujet tissé aux moyens de fils constitués de fibres comporte généralement une composante quasi-périodique ou régulière correspondant à l'armure du tissu et une composante aléatoire correspondant aux fibres et reflétant leur variabilité. La combinaison des deux composantes correspond à ce qui est observé comme une texture qualifiée, dans le cadre de l'invention, de texture à composante aléatoire. Dans l'observation d'une superposition d'une image d'authentification et d'une image de vérification d'une même région d'authentification d'un tissus de fils de fibres, il est observé selon le procédé de l'invention un motif de type Glass résultant de la composante aléatoire de la texture combiné à un moiré régulier résultant de la composante régulière de la texture.

Dans le cadre de l'invention le terme texture se rapporte à ce qui est visible ou observable sur une image ou sur un sujet ou une scène tandis que le terme structure ou microstructure se rapporte au sujet matériel en lui-même. Ainsi, une texture ou microtexture de la région d'authentification correspond à une image de la structure ou microstructure de la région d'authentification.

Dans de cadre de l'invention et selon certaines configurations, une texture à composante aléatoire peut être qualifiée de continue (texture à composante aléatoire continue) en ce qu'elle résulte de l'observation ou est l'image d'une structure continue, de la juxtaposition ou du chevauchement optique de structures continues, de la juxtaposition ou du chevauchement optique de particules ou d'éléments perçus comme de petites tailles au grandissement ou échelle d'observation. Au sens de l'invention une microstructure ou structure continue, ou visuellement continue, est soit matériellement ou physiquement continue, soit constituée d'éléments juxtaposés de telle manière que visuellement deux éléments adjacents ou consécutifs sont visuellement en contact ou superposés par opposition à une structure discrète dans laquelle deux éléments adjacents ou consécutifs ne sont pas visuellement en contact. Il est aussi possible de définir les structures ou microstructures continues au sens de l'invention comme étant notamment des milieux sans vide ou les milieux particulaires pour lequel le nombre de Knudsen est petit devant 1 et encore des milieux denses à l'échelle d'observation.

Dans une forme de mise en oeuvre préférée de l'invention, chaque sujet authentique appartient aux familles de sujets comprenant au moins une région d'authentification dont la structure matérielle est non aisément reproductible c'est-à-dire dont la reproduction est difficile voire impossible en ce qu'elle résulte notamment d'un processus de formation non totalement contrôlé impliquant de l'aléa au niveau des composants et/ou du processus lui-même. L'imagerie dans des conditions similaires d'observation selon des points de vue voisins d'une telle région d'authentification fournit des images comportant chacune une texture à composante aléatoire qui est le reflet bruité de sa structure matérielle. Une telle texture à composante aléatoire hérite sa non prédictibilité et son indépendance vis à vis d'une texture à composante aléatoire issue d'une région d'authentification complètement différente, de la part d'aléa dans la formation de leurs structures matérielles. Les régions d'authentifications correspondent aux fonctions physiques non clonales en anglais « Physical Unclonable Functions » (PUFs) telles que notamment définies par la publication en anglais Encyclopedia of Cryptography and Security édition 01/2011 pages 929 à 934 dans l'article de Jorge Guajardo. De manière préférée, la région d'authentification d'un sujet conforme à l'invention correspond à une fonction physique non clonale intrinsèque désignée en anglais par « Intrinsic PUFs » dans l'article précité.

Les inventeurs mettent à profit le fait que la nature aléatoire de la structure tridimensionnelle de la région d'authentification est inhérente ou intrinsèque à la nature même du sujet ou de la région d'authentification parce que résultant de son mode d'élaboration, de développement ou de croissance de sorte qu'il n'est pas nécessaire de rajouter à la région d'authentification une structure particulière, notamment une impression, ou encore une gravure, dont l'unique fonction serait la génération de motifs de Glass par superposition d'images de cette structure particulière. Selon l'invention, il n'est pas non plus nécessaire de synthétiser, extraire ou générer à partir de la région d'authentification un ou plusieurs motifs discrets destiner à produire un motif de Glass. Cependant, cela n'exclut pas l'utilisation de singularités naturelles ou rapportées pour faciliter le calage et/ou la mise à l'échelle relative par exemple.

Parmi, les sujets matériels comprenant une région d'authentification apte à la mise en oeuvre du procédé d'authentification visuelle selon l'invention il est possible de citer notamment :
- les papiers et emballages cartons,
- les matériaux fibreux,
- les matériaux frittés métalliques, plastiques, céramiques ou autres,
- les matériaux alvéolaires ou cellulaires,
- les cuirs y compris les galuchats,
- le bois,
- les métaux notamment usinés, frappés, moulés, injectés ou laminés,
- le verre, le verre dépoli,
- les matières plastiques, caoutchouc,
- les textiles tissés ou non tissés (avec détramage éventuel)
- certains pelages ou plumages,
- des images de scènes naturelles comme :
- images de paysage,
- images de feuillage,
- images de ciels nuageux,
- images de revêtement de chaussée ou de trottoir,
- images de champ ou de prairie,
- images de mur en pierre ou en béton,
- la peau et les empreintes digitales,
- l'iris d'un oeil d'animal ou d'être humain, les empreintes biométriques,
- les oeuvre s d'art,
- les produits ou matériaux pulvérulents ou granuleux stockés dans un récipient ou un emballage transparent,
sans que cette liste ne soit ni limitative, ni exhaustive.

II doit être noté que le caractère multi-échelle du sujet dans une région d'authentification peut permettre l'observation de textures naturelles à plusieurs grandissements distincts, des motifs de Glass étant alors susceptibles d'être observés ou générés à chacun desdits grandissements. Par ailleurs, différentes parties d'une même région d'authentification peuvent posséder des comportements optiques différents et, par exemple, comprendre une partie qui transmet la lumière et une partie qui réfléchit la lumière de façon spéculaire ou diffusante.

En ce qui concerne les motifs dits de Glass, la présente invention met à profit la mise en évidence par les inventeurs que des motifs similaires à ceux obtenus par Léon GLASS dans des articles de la revue NATURE vol.223 du 9 août 1969 pages 578 à 580 et Nature vol. 246 du 7 décembre 1973 pages 360 à 362, peuvent apparaître par superposition de deux images comprenant respectivement des textures naturelles ou à composantes aléatoires résultant de l'acquisition voire de la photographie à un grossissement ou grandissement adapté d'une même structure matérielle tridimensionnelle intrinsèque aléatoire multi-échelle d'un même sujet . A cet égard, il est également possible de se reporter à la publication de Léon GLASS ayant pour titre «Looking at dots » publiée en 2002 dans Mathematics Intelligencer, 24, N° 4, pages 37 à 43 ainsi qu'à la publication de Matthew SMITH et al. ayant pour titre « Glass pattern response in macaque V2 neurons » de la revue Journal of Vision du 27 février 2007 7.3.5 page 1 à 15. Les inventeurs ont démontré que ces motifs, de type Glass, apparaissent uniquement lorsqu'il y a superposition de textures à composante aléatoire continues issues de la même structure matérielle et essentiellement transformées géométriques résiduelles l'une de l'autre et n'apparaissent pas en pratique lorsque les textures à composante aléatoire continues ne sont pas suffisamment corrélées ou ne résultent pas de l'acquisition de la même structure matérielle correspondant à une région d'authentification d'un sujet. L'invention est donc à même d'assurer une authentification unitaire.

Le procédé selon l'invention s'appuie sur l'observation de motifs de Glass, observation qui met en oeuvre selon Léon GLASS le système visuel qui est largement partagé par l'ensemble des êtres humains. Il s'agit là d'un processus instinctif analogue à la différenciation de deux couleurs qui ne fait intervenir aucune réflexion ou mécanisme intellectuel réfléchit en tant que tel.

L'observation d'un motif de type Glass permet en outre, de façon immédiate, dans la cadre de l'invention, de sécuriser ou conforter l'opérateur dans sa prise de décision pour valider ou non l'authenticité du sujet candidat. A cet égard, il doit être souligné que l'invention permet de lever le doute quant à l'authenticité du sujet candidat dans la mesure où si un motif de type Glass est observé alors il y a certitude sur l'authenticité dans les conditions de mise en oeuvre données (si les conditions de mise en oeuvre sont bien respectées) du sujet qui reste à la vue et/ou accessible à la manipulation par l'opérateur, sans traitement d'image dénaturant la texture à composante aléatoire continue issue de la structure matérielle de la région d'authentification. En revanche, en cas de non observation d'un motif de Glass, il n'est pas possible de conclure avec certitude à la non authenticité.

De plus, les inventeurs ont mis en évidence le fait que, dans le cas d'authentification de sujet matériel, si ledit sujet matériel présente une stabilité matérielle suffisante dans le temps, des images réalisées à des instants différents pouvant être séparés par plusieurs jours, mois, ou années permettent par leur superposition d'engendrer de tels motifs de Glass. De plus, selon l'invention le sujet authentique peut subir des modifications après l'enregistrement de l'image d'authentification tout en restant authentifiable dans la mesure où une partie de la région d'authentification n'a pas été profondément affectée par ces modifications volontaires ou non.

Les inventeurs ont aussi mis en évidence qu'il n'est pas nécessaire de procéder à la synthèse et/ou construction et/ou la fabrication d'une structure spécifique (quasi-)aléatoire ou non pour générer un motif de Glass et notamment qu'il n'est pas nécessaire d'imprimer ou générer un nuage de points à distribution aléatoire ou quasi-aléatoire sur un support pour obtenir l'apparition d'un motif de Glass par la superposition d'images de ce nuage. Les inventeurs ont également mis en évidence que des motifs de Glass obtenus après superposition d'images, sont susceptibles d'authentifier un sujet en se fondant sur son caractère non reproductible et sur une acquisition, dans des conditions d'observation similaires, de sa texture à composante aléatoire à deux instants différents et pas seulement d'apparaître en réponse à une synthèse d'images de points, typiquement dans un but d'authentification ou d'étude de l'aptitude de la vision humaine à identifier un tel motif. De plus, les inventeurs ont démontré que l'observation de motifs de Glass est possible par la superposition de deux images d'une même région d'authentification possédant une texture à composante aléatoire continue et cela sans adjonction, extraction ou génération d'éléments discrets ou de motifs discrets comme le préconise l'art antérieur

L'invention possède l'avantage de mettre en oeuvre des processus simples qui ne requièrent pas une importante puissance de calcul et/ou une scrutation / comparaison fine comme cela est le cas pour les systèmes antérieurs, dans la mesure où l'invention s'appuie sur, d'une part, les propriétés d'unicité, de non reproductibilité et d'imprédictibilité de la structure matérielle et, d'autre part, le système visuel humain, à savoir la capacité de ce dernier à effectuer naturellement une identification de la présence d'un motif de Glass comme l'a démontré Léon Glass lui-même. Par ailleurs, l'observation du motif de Glass, réalité physique mesurable, peut également être effectuée par un dispositif électronique de vision industrielle ou synthétique effectuant des mesures de similarité entre les deux images ou des mesures de champs sur l'image composée de la superposition des deux images.

Une première forme de mise en oeuvre est définie par la revendication 1.

Selon une caractéristique de la première forme de mise en oeuvre, l'image d'authentification est projetée sur le sujet à authentifier ou candidat.

Selon encore une autre caractéristique de la première forme de mise en oeuvre, la région d'authentification du sujet authentique est au moins translucide et la phase de vérification est effectuée en transvision.

Selon une caractéristique de la première forme de mise en oeuvre, la phase de vérification est effectuée au moyen d'un dispositif électronique comprenant au moins des moyens d'affichage adaptés pour afficher ou projeter l'image d'authentification et pour permettre la superposition du sujet candidat et de l'image d'authentification sensiblement à l'échelle du sujet candidat.

Une deuxième forme de mise en oeuvre est définie par la revendication 5.

Dans une forme préférée, si aucun motif de Glass n'est observée à la simple superposition alors la phase de vérification est poursuivie pour chercher un motif de glass en réalisant tout d'abord un recalage relatif des images de vérification et d'authentification puis en réalisant des transformations de type modifications d'échelle relative ou homothétie et/ou des déplacements de type rotation et/ou translation ou des combinaisons de ces déplacements.

Dans une autre forme préférée, les images d'authentification et de vérification sont réalisées dans des conditions similaires.

De manière préférée mais non strictement nécessaire, lors de la phase de vérification visuelle, le sujet candidat est présent physiquement devant l'opérateur qui peut l'observer directement voire le toucher et même le mouvoir ou mouvoir autour le système optique ou d'acquisition associé à un système d'affichage. Ainsi, le sujet candidat se situe dans l'environnement sensoriel de confiance de l'opérateur ce qui contribue à la fiabilité de l'opération d'authentification.

De même et de manière préférée mais non strictement nécessaire, les corrections de la qualité d'image réalisées sur l'image de vérification et/ou sur l'image d'authentification sont réalisées en temps réel sous le contrôle visuel de l'opérateur de manière qu'il puisse s'assurer qu'il n'y a pas dénaturation de la texture à composante aléatoire dans l'image et/ou substitution d'image, ces modifications étant de préférence réversibles de sorte qu'il est possible revenir à l'image initiale.

Dans le cadre de l'invention, la superposition réalisée peut être statique, c'est-à-dire sans qu'il y ait mouvement relatif des éléments superposés, ou dynamique c'est-à-dire lors d'un mouvement relatif des éléments superposés, dans la mesure du possible décidable par l'opérateur. De même, selon l'invention il est possible de superposer deux images ou une image et un flux vidéo voire deux flux vidéo étant entendu qu'un flux vidéo correspond à une séquence d'images. Ainsi dans le cadre de l'invention ce qui est explicité en relation à une superposition images statiques s'applique mutatis mutandis à une superposition d'une image avec une séquence d'images ou une superposition de séquences d'images de manière synchronisée ou non.

II doit être remarqué que les deux formes de mise en oeuvre de l'invention recherchent l'apparition d'un motif de type Glass. Or, un tel motif de Glass n'apparaît que dans le cas d'un sujet authentique et que s'il existe une transformation géométrique légère non nulle dite au sens de l'invention transformation géométrique résiduelle entre le sujet candidat et l'image d'authentification ou entre les images de vérification et d'authentification, acquises dans les conditions données. Dans le cas théorique d'une superposition parfaite d'éléments/d'images strictement identiques, il n'y a pas d'apparition d'un motif de Glass même en présence d'un sujet authentique, d'où la nécessité de la présence de cette transformation géométrique résiduelle et l'intérêt généralement de la mise en oeuvre d'un mouvement ou un déplacement relatif ou encore une déformation induite par une différence d'angle de prise de vue ou de point de vue entre les acquisitions de l'image d'authentification et de l'image de vérification. Cette propriété des motifs de Glass offre une grande robustesse au procédé selon l'invention dans la mesure où il n'est pas nécessaire que les conditions d'acquisition de l'image de vérification soient strictement identiques aux conditions d'acquisition de l'image d'authentification. Ainsi, les résolutions des images d'authentification et de vérification peuvent notamment être différentes.

II doit être noté que selon l'invention et dans le cadre de la première forme de mise en oeuvre, l'image d'authentification est une image optique dont la chaîne d'acquisition comprend une partie optique et qui résulte de la sollicitation de la région d'authentification par un rayonnement lumineux visible ou perceptible par l'œil humain, le système visuel humain ou un capteur adapté d'un système de vision industrielle ou automatisée.

Dans le cadre de la deuxième forme de mise en oeuvre, le terme image doit être entendu au sens large et non pas limité au seul sens d'une image optique résultant notamment de la sollicitation de la région d'authentification par un rayonnement lumineux visible. Ainsi, dans le cadre de la deuxième forme de mise en oeuvre, les images d'authentification et de vérification peuvent être obtenues par tout type de sollicitation de la région d'authentification en association avec une chaîne d'acquisition adaptée, étant entendu que le même type ou la même nature de sollicitation est mis en oeuvre pour l'acquisition des images d'authentification et de vérification. Parmi les types de sollicitations ou les modes d'acquisition envisageables il est possible notamment de citer : les ultrasons, les rayonnements X ou gamma, la tomographie X ou laser, la radiographie X, la résonance magnétique, sans que cette liste ne soit limitative ou exhaustive.

Selon une caractéristique préférée mais non strictement nécessaire de la deuxième forme de mise en oeuvre de l'invention, la phase de vérification est effectuée au moyen d'un dispositif électronique comprenant au moins :
- des moyens d'acquisition adaptés pour acquérir au moins une image de vérification,
- des moyens d'affichage adaptés pour afficher sur un écran de visualisation l'image de vérification et pour permettre la superposition des images de vérification et d'authentification sensiblement à une même échelle.

De manière préférée mais non strictement nécessaire, le dispositif électronique est adapté pour permettre de moduler ou régler le niveau de transparence ou d'opacité absolue ou relative des images superposées. Ce niveau de transparence ou d'opacité est également appelé canal a. Ainsi, le dispositif électronique est de préférence adapté pour autoriser un réglage du canal α.

Selon une variante de l'invention, le dispositif électronique est adapté pour assurer un affichage d'une séquence ou série d'images de vérification résultant d'un déplacement relatif des moyens d'acquisition et du sujet candidat et pour permettre la superposition des images de vérification avec l'image d'authentification. Cette variante permet, notamment, de mettre facilement en oeuvre le procédé selon l'invention lorsque l'emplacement exact de la région d'authentification sur le sujet candidat n'est pas parfaitement connu ou repéré sur ce dernier.

Selon une autre variante de l'invention, lors de l'étape d'enregistrement il est réalisé l'acquisition d'une séquence d'images d'authentification et le dispositif électronique, utilisé lors de la phase de vérification, est adapté pour acquérir une séquence d'images de vérification et pour permettre une visualisation de la superposition de la séquence d'images d'authentification avec la séquence d'images de vérification.

Selon une autre variante de l'invention, le dispositif électronique comprend des moyens de traitement adaptés pour réaliser une transformation géométrique au moins locale d'au moins une image des images superposées et/ou un déplacement relatif des images superposées. Cette variante peut notamment faciliter la tâche de l'opérateur qui peut alors ne déclencher l'acquisition que d'une seule image de vérification, le dispositif électronique permettant alors de réaliser le déplacement relatif ou la transformation géométrique relative nécessaire à l'apparition d'un motif de type Glass dans le cas d'un sujet authentique.

Selon encore une autre variante de l'invention, au moins une image de vérification est enregistrée sous forme numérique. Un tel enregistrement sous forme numérique facilite substantiellement les traitements ultérieurs par le dispositif électronique.

Il doit être noté qu'au sens de l'invention le terme « enregistrement » sans précision est entendu au sens large sous réserve bien entendu d'être compatible avec la mise en oeuvre correspondante de l'invention. Ainsi le terme enregistrement vise, au sens de l'invention, un enregistrement de toute manière appropriée sous une forme numérique ou analogique. Parmi les modes d'enregistrement compatibles avec l'invention, il est possible de citer notamment : un enregistrement sous un format informatique et/ou électronique quelconque, un enregistrement sous une forme imprimée sur un support adapté à la mise en oeuvre de l'invention comme par exemple un support transparent, un enregistrement photographique sur un support tel qu'une pellicule photographique positive ou négative, couleur ou noir et blanc, un enregistrement sous une forme holographique, un enregistrement sous forme gravée notamment au laser, sans que cette liste ne soit limitative ou exhaustive.

Selon une autre variante de l'invention, l'image de vérification est visualisée et/ou enregistrée sous une forme binarisée, en niveau de gris ou en demi-tons ou encore en couleur. De la même manière, selon encore une autre caractéristique de l'invention, l'image d'authentification est visualisée et/ou enregistrée sous une forme binarisée, en niveau de gris ou en demi-tons ou encore en couleur.

Selon une caractéristique de l'invention, le dispositif électronique est adapté pour enregistrer au moins une image résultant de la superposition.

Selon une autre caractéristique de l'invention, le procédé d'authentification, comprend en outre une phase de vérification automatique qui est effectuée en partie au moins par le dispositif électronique. La partie de la phase de vérification automatique effectuée par le dispositif électronique peut alors comprendre simplement l'acquisition de l'image de vérification et l'envoi de cette image de vérification à une unité de traitement externe. Bien entendu, le dispositif électronique peut également réaliser l'ensemble des étapes de la phase de vérification automatique.

Selon une caractéristique de l'invention, la phase de vérification automatique comprend une étape de calcul d'un coefficient de similarité entre une image de vérification et l'image d'authentification pour, si le coefficient de similarité est supérieur à un seuil donné, conclure à une forte probabilité d'authenticité voire à une authenticité et dans le cas contraire ne pas conclure à l'authenticité (non levée de doute).

Selon une variante de cette caractéristique, le calcul du coefficient de similarité est, par exemple, effectué à partir de signatures extraites d'une image de vérification et de l'image d'authentification. Il peut ainsi être utilisé un vecteur « issu de la décomposition »de l'image à analyser sur une base prédéfinie, typiquement des fonctions de Gabor ou des ondelettes en adéquation avec la caractérisation des champs récepteurs du cortex visuel primaire (cf J.G. Daugman, Computational Neuroscience, ed Schwartz E., 403-423, MIT Presse, Cambridge, MA, 1990), ou une base apprise sur une famille - typiquement à laquelle appartient l'image du sujet - en adéquation avec les caractéristiques de cette famille, par factorisation non négative de matrice (NMF) ou analyse en composantes principales (PCA). L'utilisation atypique (i.e. base prédéfinie autre que Gabor, et famille autre que celle à laquelle appartient l'image du sujet) est possible.

La signature peut être directement le vecteur de décomposition et la mesure de similarité la distance euclidienne par exemple dans le cas de la NMF. La signature peut être le vecteur formé des signes des composantes du vecteur de décomposition et la mesure de similarité la distance de Hamming : cas de l' « iriscode » de Daugman que l'on peut aisément transposer à d'autres types de sujets à authentifier.

La phase de vérification automatique peut comprendre une étape de transmission ou communication du résultat de la vérification automatique à un tiers ou à l'opérateur. Par tiers il convient d'entendre toute personne différente de l'opérateur comme par exemple un fabricant, un vendeur ou un propriétaire du sujet candidat, une autorité de certification ou d'authentification, une autorité ou une agence gouvernementale ou supranationale, les pouvoirs publics, un fournisseur ou prestataire de services, un tiers de confiance sans que cette liste ne soit limitative ou exhaustive. Le résultat de la vérification automatique peut également être associé, avant envoi, à d'autres données telles que des données de géolocalisation, horodatage, profil ou identité de l'opérateur sans que cette liste ne soit exhaustive. De telle données peuvent être utilisées dans le cadre de la gestion de la relation client désignée par CRM pour en anglais « Customer Relationship Management » voir des applications « Enhanced Customer Expérience ». Ces données peuvent également être utilisées par le producteur ou un distributeur d'un sujet authentifié afin notamment de savoir si ce sujet se trouve dans une zone de chalandise pour laquelle il a été prévu notamment afin de contrôler les réseaux de distribution et prévenir la distribution parallèle.

II doit être remarqué que la phase d'authentification visuelle réalisée par l'opérateur peut également, et indépendamment de toute vérification automatique, être suivie par une phase d'envoi d'information à un tiers initiée par l'opérateur. L'information envoyée peut notamment indiquer s'il y a eu ou non levée de doute.

Selon une caractéristique susceptible d'être utilisée dans les deux formes de mise en oeuvre de l'invention, l'image d'authentification est enregistrée en appliquant sur cette dernière une matrice ou une grille de cellules à bords épais indépendants de l'image d'authentification dont l'intérieur est formée par la partie correspondante de l'image d'authentification après lui avoir fait subir le cas échéant une transformation au moins géométrique choisie parmi une collection de transformations. Un tel mode d'enregistrement de l'image d'authentification peut dans certaines applications faciliter le contrôle ou la vérification effectuée par l'opérateur. Il doit être remarqué que toutes les cellules d'une grille ne présentent pas nécessairement une même forme. Par ailleurs la taille ou la surface de chaque cellule est choisie de manière à être suffisante pour permettre la visualisation totale ou partielle d'un motif de Glass le cas échéant dans la cellule correspondante. L'épaisseur des bords de cellules doit être au moins égale à la longueur de corrélation de l'image d'authentification à l'endroit des cellules en question, de façon à jouer le rôle de surface de séparation entre les cellules et ne pas permettre la prédiction de la transformation inverse à celle appliquée le cas échéant à une cellule donnée (indépendance entre les intérieurs de deux cellules disjointes). Par longueur de corrélation il convient d'entendre une valeur proportionnelle à la largeur à mi-hauteur du pic d'auto-corrélation de l'image considérée.

Selon une variante de cette caractéristique, les cellules subissant une transformation sont choisies de manière à former un message ou motif lors de la superposition avec une image de vérification. Cette variante de mise en oeuvre de l'invention peut être considérée comme un procédé de cryptographie visuelle à deux images partagées une des images étant l'image d'authentification tandis que l'autre image est soit le sujet candidat en lui-même soit une image de vérification.

A noter que selon une variante de l'invention, la grille de cellules et le choix d'une transformation à réaliser ou non par cellule peut être appliquée dans ce dernier cas uniquement ou également à l'image de vérification. Outre la révélation d'une image-message secrète, la visualisation d'une image-message en cas de sujet authentique permet de faciliter et de conforter la prise de décision et la confiance de l'opérateur.

Selon une caractéristique applicable aux deux formes de mise en oeuvre de l'invention, la transformation géométrique consiste en au moins une transformation géométrique résiduelle à appliquer localement à l'image ou aux images, choisie de type rigide ou non, de nature linéaire ou non linéaire, à au moins un point fixe ou quasi-fixe. Parmi les transformations géométriques applicables, il est ainsi possible de mettre en oeuvre les transformations décrites par Léon Glass dans ses articles de 1973 et 2002 cités précédemment et incorporés ici par référence. Par point quasi-fixe il convient d'entendre un point subissant après transformation géométrique résiduelle un déplacement de faible amplitude vis à vis du déplacement maximal causé par la transformation géométrique résiduelle.

Selon une autre caractéristique applicable aux deux formes de mise en oeuvre de l'invention, la transformation géométrique induit une modification réduite de faible amplitude de la partie d'image modifiée de l'image de la région d'authentification avant modification.

Selon encore une autre caractéristique applicable aux deux formes de mise en oeuvre de l'invention, le déplacement relatif est une translation, une rotation ou la combinaison d'une ou plusieurs rotation et/ou translation.

Selon une caractéristique applicable aux deux formes de mise en oeuvre de l'invention, la distance de déplacement relatif est réduite de faible amplitude.

Selon une caractéristique de l'invention, l'image d'authentification est enregistrée sous une forme analogique sur un support analogique de type pellicule photographique ou imprimée sur un support transparent.

Selon une autre caractéristique de l'invention, l'image d'authentification est enregistrée en niveau de gris ou en demi-tons. Bien entendu, l'image d'authentification peut aussi être enregistrée en couleur.

Selon encore une autre caractéristique de l'invention, l'image d'authentification est enregistrée sous forme numérique et peut avoir subi une phase de compression de manière à optimiser l'espace de stockage des images d'authentification par exemple.

Selon une variante de cette caractéristique, le sujet authentique est associé à un identifiant et l'image d'authentification correspondante est stockée dans une base de données en étant indexée au moins par l'identifiant du sujet authentique ou encore l'image d'authentification peut porter en incrustation l'identifiant (tatouage filigrane, ...). L'identifiant peut alors être enregistré ou stocké ou porté sur le sujet authentique selon différents procédés connus et idéalement en partie de manière cachée d'un utilisateur moyen.

Selon une autre variante de cette caractéristique, un identifiant du sujet candidat est une signature extraite ou calculée à partir de la région d'authentification. Ainsi, la phase de vérification peut comprendre préalablement à l'étape de superposition, une étape de détermination de la signature du sujet candidat suivi d'un envoi de la signature déterminée à un serveur qui en réponse à cet envoi et sur la base de la signature adresse au dispositif électronique de vérification une ou plusieurs images d'authentification à utiliser pour l'étape de superposition. Le serveur comprendra alors une base d'images d'authentification indexées sur la base d'une signature et éventuellement d'un identifiant des sujets authentiques. La vérification peut alors consister à comparer quantitativement la signature extraite du sujet candidat soit à la signature pointée en référence dans la base de données (authentification un contre un) soit à un sous-ensemble de n signatures identifiées dans la base de données (n petit, typiquement de l'ordre de 1 à 10) comme les signatures les plus proches et/ou les sujets authentiques les plus probables (identification 1 contre n), les images d'authentification correspondantes pouvant alors être soumises à la reconnaissance visuelle ou transmises comme telles pour exécution du procédé objet de l'invention.

Selon une caractéristique de l'invention, les images d'authentification et/ou de vérification font l'objet d'au moins un détramage et/ou filtrage avant superposition. Cette caractéristique permet d'éliminer d'éventuels motifs périodiques susceptibles d'interférer avec ou de faire obstacle à la perception des motifs de type Glass en cas de sujet authentique.

Selon une caractéristique préférée de l'invention, les images d'authentification et de vérification ne subissent, en vue de la superposition, pour la phase de vérification aucune transformation autre que des opérations d'amélioration ou de modification du contraste, de la luminosité, de transformation en demi-teinte, de changement d'espace colorimétrique telles que le passage en niveaux de gris ou en noir et blanc, des opérations de modification de la saturation dans certaines teintes, inversion des niveaux ou encore des modifications d'opacité relative via le canal α. Ainsi, selon cette caractéristique préférée, les images subissent, de manière générale, des transformations dites d'amélioration qui n'afFectent pas la possibilité de reconnaître visuellement la nature du sujet. De manière préférée, les transformations appliquées ne dénaturent pas les images, en particulier les textures à composante aléatoire continues qu'elles contiennent. Cela s'applique également aux parties des images situées dans les cellules de la variante cryptographique de l'invention. Il doit être noté que les opérations d'amélioration peuvent ne concerner qu'une seule des deux images et que de plus ces opérations d'amélioration ne sont pas toujours nécessaires à la mise en oeuvre de l'invention. Selon une caractéristique de l'invention, au moins l'une des deux images ne subit pas de transformation consistant à l'échantillonner au moyen de grilles quelconques, épaisses ou non, régulières, périodiques ou encore aléatoires.

Selon une autre caractéristique de l'invention, la position de la région d'authentification sur le sujet authentique est enregistrée. Un tel enregistrement permet, bien qu'il ne soit pas absolument nécessaire, de faciliter la phase de vérification.

Selon encore une autre caractéristique de l'invention, la position de la région d'authentification est repérée sur le sujet authentique. Ce repérage permet, bien qu'il ne soit pas absolument nécessaire, d'également faciliter la phase de vérification.

Selon une caractéristique de l'invention, le sujet authentique appartient à au moins une des catégories de document, sujet, ou objet suivantes : document fiduciaire, document de sécurité, billet de banque, document contractuel, pièce de monnaie, document officiel, document ou pièce d'identité, produit de luxe, oeuvre d'art, produit d'art, produit réglementé, emballage, médicament notamment comprimé, pièce mécanique de sécurité ou autre, pièce mécanique d'usure, composants optiquement variables, hologrammes de protection et de manière générale tout objet, produit ou sujet dont il peut s'avérer nécessaire de pouvoir contrôler l'authenticité et/ou l'intégrité.

L'invention concerne également un dispositif électronique susceptible d'être utilisé pour l'une ou l'autre des formes de mise en oeuvre du Procédé d'authentification selon l'invention notamment pour la phase de vérification. Ce dispositif permet de réaliser sur son écran d'affichage la superposition des images de vérification courante et d'authentification via le canal alpha en donnant la possibilité d'effectuer en relatif, le cas échéant de façon numérique, une rotation, un changement d'échelle selon l'horizontale, respectivement la verticale, une translation ou encore une correction de distorsions notamment optiques. De manière préférée mais non strictement nécessaire le dispositif électronique comprend un écran de visualisation tactile et se trouve adapté pour permettre une modification du grandissement de visualisation de l'image d'authentification et/ou de l'image de vérification par le déplacement de deux points de contact sur l'écran tactile. Un grossissement X4 peut typiquement être investigué. L'écran tactile peut également être mis à profit pour assurer la commande du déplacement relatif des images superposées, typiquement une rotation avec un angle non nul inférieur à 10°. Ce dispositif permet de réaliser efficacement une recherche de motif de type Glass. En particulier le dispositif permet d'effectuer selon une recherche préférée, tout d'abord le recalage des images de vérification et d'authentification puis une transformation géométrique résiduelle en vue de faire apparaître un motif de type Glass. Une alternative est d'effectuer une superposition en l'état des images de vérification et d'authentification jusqu'à obtention d'un motif de type Glass ou du recalage des images.

Bien entendu, les différentes caractéristiques, variantes et formes de mise en oeuvre du procédé selon l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent des formes non limitatives de mise en oeuvre du procédé conforme à l'invention.
- La figure 1 est un sujet authentique, à authentifier au moyen du procédé selon l'invention, formé par un billet de banque et sur lequel la région d'authentification est encadrée
- La figure 2 illustre un organigramme d'un exemple de mise en oeuvre du procédé selon l'invention.
- La figure 3 est une image d'authentification de la région d'authentification du sujet authentique de la figure 1.
- La figure 4 est une image de vérification de la région d'authentification d'un sujet candidat analogue au sujet authentique de la figure 1.
- La figure 5 montre un exemple d'étape d'acquisition de la phase de vérification du procédé selon l'invention.
- La figure 6 est une image de la superposition des images des figures 3 et 4 qui permet de visualiser un motif de Glass.
- La figure 7 montre de manière non exhaustive différentes formes possibles de motifs de Glass susceptibles d'être visualisé dans le cadre de la mise en oeuvre de l'invention. La figure 8 est une image d'un sujet authentique, à authentifier au moyen du procédé selon l'invention, formé par une feuille de papier sur laquelle la région d'authentification est repérée par un cadre imprimé.
- La figure 9 est une image d'authentification, ici une diapositive, de la région d'authentification du sujet authentique de la figure 5.
- La figure 10 est une image de la superposition des images des figures 5 et 7 qui permet de visualiser un motif de Glass.
- La figure 11 est une image d'un sujet candidat formé par une feuille de papier qui est différente de celle de la figure 5 et sur laquelle la région d'authentification est repérée par un cadre imprimé.
- La figure 12 est une image de la superposition des images des figures 6 et 8 qui ne permet pas de visualiser de motif de Glass.
- La figure 13 est une image d'authentification d'un sujet authentique à authentifier au moyen du procédé selon l'invention, formé par une paume de main.
- La figure 14 est une image de vérification d'un sujet candidat analogue à celui de la figure 13.
- La figure 15 est une image de la superposition des images des figures 13 et 14 qui permet de visualiser un motif de Glass montrant ainsi que le sujet candidat et les sujet authentique.
- La figure 16 est une image d'authentification d'un sujet authentique formé par une scène naturelle.
- La figure 17 est une image de vérification du sujet authentique de la figure 16 avec un angle de prise de vue légèrement différent de celui de la figure 16.
- La figure 18 est une image de la superposition des images des figures 15 et 16 qui permet de visualiser un motif de Glass.
- La figure 19 est une image d'authentification d'un sujet authentique, formé par des produits granuleux stockés dans un récipient transparent.
- La figure 20 est une image de vérification du sujet authentique de la figure 19.
- La figure 21 est une image de la superposition des images des figures 19 et 20 qui permet de visualiser un motif de Glass.
- La figure 22 est une image d'authentification d'un sujet authentique formé par une étendue de sable.
- La figure 23 est une image de vérification du sujet authentique de la figure 22 qui diffère de la figure 22 en ce qu'une partie de l'étendue de sable a été remuée et en ce qu'une ombre y est présente.
- La figure 24 est une image de la superposition des images des figures 21 et 22 qui permet de visualiser un motif de Glass.
Il est à noter que sur ces figures les éléments structurels et/ou fonctionnels communs aux différentes variantes peuvent présenter les mêmes références.

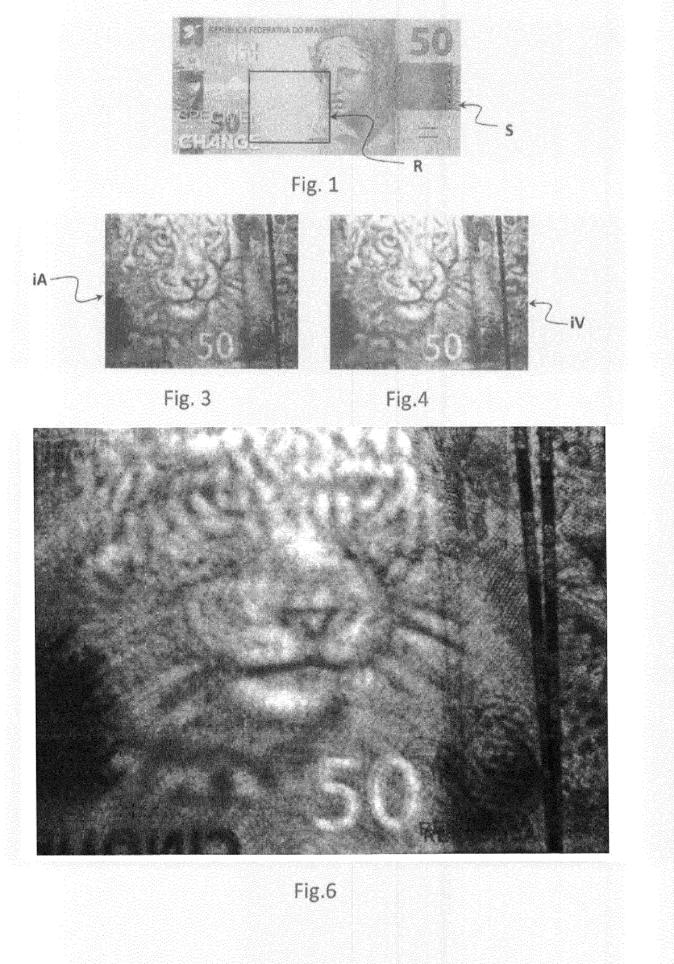

Dans le cadre d'un premier exemple de mise en oeuvre du procédé selon l'invention, il est choisi en tant que sujets à authentifier S des billets de banques imprimés sur du papier filigrané comme illustré à la figure 1. A cet effet, il est choisi en tant que région d'authentification R une région filigranée en partie au moins translucide. Une telle région filigranée R présente l'avantage de présenter le motif du filigrane qui offre un moyen pour repérer facilement la région d'authentification au niveau de laquelle devrait apparaître le motif de Glass lors d'une phase de vérification. De plus, la région filigranée permet de facilement observer la structure fibreuse du papier qui constitue une structure intrinsèque assimilable à l'échelle d'observation à un milieu continu essentiellement aléatoire non aisément reproductible voire non reproductible. Dans le cas du papier, il est possible de parler de microstructure continue essentiellement aléatoire non reproductible en ce sens que cette microstructure diffuse la lumière l'illuminant dans toutes les directions et est par essence aléatoire et différente d'une région à l'autre d'une même feuille de papier ou de feuilles de papier issues de la même machine ou encore de feuilles de papier issues de machines différentes.

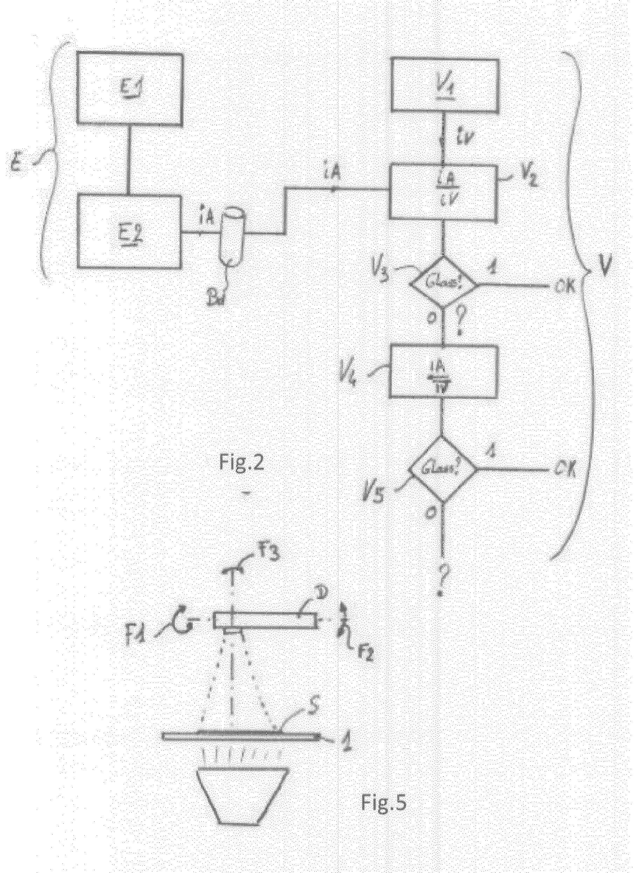

Comme cela ressort de la figure 2, il est tout d'abord procédé à une phase d'enregistrement E qui est par exemple effectuée après fabrication des billets et avant leur mise en circulation. La phase d'enregistrement peut par exemple intervenir juste après l'impression du numéro de série de chaque billet.

Lors de cet d'enregistrement il est procédé pour chaque billet, formant un sujet authentique, à l'acquisition El d'une image dite d'authentification iA représentée figure 2 comprenant au moins la région d'authentification. Pour réaliser l'acquisition, il est mis en oeuvre un système permettant de placer chaque billet en regard d'une caméra d'acquisition reliée à un système électronique d'enregistrement et de stockage des données. L'éclairage des billets est assuré de préférence à l'opposé de la caméra d'acquisition de sorte que la région d'acquisition est observée en transmission. De manière générale l'éclairage du sujet, ici le billet, est adapté au comportement optique de la région d'authentification en réflexion et/ou en transmission.

L'acquisition de chaque image d'authentification iA est réalisée à un grossissement ou agrandissement d'acquisition donné et adapté à la nature de la microstructure du papier dans le cas présent. Selon cet exemple de mise en oeuvre du procédé conforme à l'invention, le grandissement d'acquisition est choisi à une valeur initiale qui coïncide à une observation visuelle sans optique intermédiaire. Dans le cadre de l'invention, le grandissement correspond au rapport d'une des dimensions linéaires de l'image finale donnée par le système optique, à la dimension correspondante de l'objet. De même dans le cadre de l'invention, le grossissement correspond au rapport entre le diamètre ou angle apparent de l'objet observé et le diamètre ou angle apparent de l'image qu'en donne l'instrument d'observation, d'acquisition.

Chaque image d'authentification iA, telle qu'illustrée à la figure 3, est, après son acquisition, enregistrée E2, le cas échéant sous forme compressée, dans une base de données Bd en étant indexée sur la base d'un identifiant du billet correspondant, par exemple son numéro de série.

Dans une phase de vérification V, lorsqu'un opérateur souhaite vérifier l'authenticité d'un billet de banque appartenant à la série des billets de banque ayant fait l'objet de la phase d'enregistrement, l'opérateur procède à l'acquisition V1 d'une image de vérification iV de la région d'authentification. L'image de vérification iV peut par exemple comprendre une image de l'intégralité du filigrane acquise à un grandissement au moyen d'un dispositif électronique D, tel que par exemple un Smartphone, comprenant un appareil photo et un écran de visualisation tactile ou non. De manière préférée, le dispositif électronique comprend des moyens d'acquisition d'image, des moyens de calcul et de traitement d'image, des moyens de communication avec un réseau de communication étendu, des moyens de visualisation d'une image, des moyens de saisie et se trouve adapté pour mettre certaines étapes au moins du procédé selon l'invention. Parmi les dispositifs électroniques susceptibles d'être mis en oeuvre, il est possible de citer notamment outre les smartphones, les tablettes, les ordinateurs associés à des systèmes d'acquisition et de visualisation tels qu'un écran, une paire de lunette à système de projection intégré, un vidéo projecteur sans que cette liste ne soit limitative ou exhaustive.

L'image de vérification, telle qu'illustrée à la figure 4, est par exemple réalisée en plaçant le sujet candidat S sur une vitre 1 de manière qu'il soit éclairé par l'arrière lors de l'acquisition comme le montre la figure 5. De manière préférée, les conditions d'acquisition des images d'authentification et de vérification sont proches sans pour autant être nécessairement identiques. Il doit être noté que, dans le cas présent, l'opérateur a en sa possession le sujet candidat S au moment de l'acquisition de l'image de vérification ce qui contribue à renforcer la confiance de l'opérateur dans l'opération de contrôle qu'il conduit.

Ensuite, il est mis en oeuvre une application adaptée qui aura été préalablement installée par l'opérateur sur le dispositif électronique D. Cette application interroge sur la base du numéro de série du sujet candidat préalablement saisi par l'opérateur une base de données distante de manière que la base de données envoie à l'application l'image d'authentification iA correspondant au numéro de série. L'application assure alors, étape V2, la superposition de l'image de vérification et de l'image d'authentification ce qui permet de visualiser l'image représentée figure 6. Si les images de vérification et d'authentification ne sont pas sensiblement calées ou en coïncidence, l'opérateur procède au déplacement relatif des images de vérification et d'authentification pour tendre à leur recalage en s'aidant du motif du filigrane au moyen des touches du Smartphone ou en déplaçant son doigt sur l'écran si ce dernier est tactile. Cette action de l'opérateur permet alors de décaler l'une des deux images par rapport à l'autre si elles étaient initialement en coïncidence et de mettre en évidence de façon progressive leur similarités au travers de la formation d'un motif de Glass au voisinage de leur recalage / coïncidence. Si pendant ce déplacement relatif de l'image d'authentification par rapport à l'image de vérification, étape V3, l'opérateur observe un motif de Glass, tel que visible à la figure 6, alors il peut conclure que le sujet candidat est le sujet authentique, ici le billet de banque en sa possession.

Si l'opérateur n'observe pas de motifs de Glass lors de cette opération de recalage et jusqu'au moment où il a placé les images d'authentification et de vérification en coïncidence, il peut à partir de là commander, étape V4, un léger déplacement relatif des deux images par exemple une légère rotation, typiquement de 2° ou 5. Ce léger déplacement peut alors résulter d'une commande analogue à celle utilisée pour l'opération de recalage. Le léger déplacement peut aussi résulter d'une fonction de l'application qui assure de manière automatique le déplacement relatif des deux images dont les paramètres ont été pré-enregistrés. Si suite à ce léger déplacement, l'opérateur observe, étape V5, un motif de Glass alors il peut conclure que le sujet candidat est le sujet authentique. En revanche, si l'opérateur n'observe pas de motifs de Glass alors il ne peut pas conclure à l'identité entre le sujet candidat et le sujet authentique, il ne peut pas lever le doute.

Le fait que le recalage ou le déplacement de l'une des deux images est initié et décidé par l'opérateur permet de confirmer à l'opérateur qu'il est bien maître de l'opération et donc de renforcer la confiance dans l'opération de contrôle réalisée. En effet, les dernières étapes de l'authentification visuelle sont assurées par l'opérateur de sorte qu'il n'a pas à craindre de se voir fournir une information erronée puisque c'est l'opérateur qui dans le cadre de l'authentification visuelle décide s'il y a authentification ou non.

Le procédé d'authentification selon l'invention permet donc d'assurer de manière simple une vérification de l'authenticité d'un sujet candidat ou à authentifier par un opérateur, la décision finale quant au caractère authentique du sujet candidat restant du ressort de l'opérateur. Par ailleurs, cette intervention de l'opérateur peut conforter des contrôles effectués de manière automatisés.

Par ailleurs, il doit être remarqué que le motif de Glass apparaît, comme cela ressort de la figure 6, dans les zones claires et sombres du filigrane avec une continuité ou une trace, résultant du déplacement ou de la transformation appliquée, qui s'étend dans les zones claires et sombres. Ainsi, les inventeurs ont mis en évidence que l'apparition du motif de Glass ne nécessite pas un fond uniformément clair ou sombre et des nuages de points tels que mis en oeuvre par Léon Glass dans ses publications précitées.

De plus, il doit être remarqué que les autres éléments de sécurité intégrés au billet de banque restent accessibles et visibles de l'opérateur qui peut les utiliser pour conforter l'authentification à laquelle il a procédé.

Le procédé selon l'invention est particulièrement robuste dans la mesure où les images d'authentification iA et/ou de vérification iV ou encore le sujet authentique S peuvent subir dans le temps des modifications sans que cela fasse obstacle à la mise en oeuvre du procédé sous réserve que les modifications restent mineures au sens où les images d'authentification et de vérification sont des transformées essentiellement géométriques l'une de l'autre selon par exemple une transformation géométrique relative G présentant au moins un point fixe ou quasi fixe ou encore que ces images résultent d'une transformation essentiellement projective du sujet selon des points de vue et des poses voisines lors de leur acquisition dans des conditions similaires.

Parmi les transformations ou modifications qui ne font pas obstacle à la mise en oeuvre de l'invention il est possible de citer :
- un petit déplacement (rotation-translation) ou une petite transformation géométrique dont les paramètres évoluent dans le temps selon un mouvement non prédéfini et non connu a priori, impulsé par l'observateur pour renforcer encore la confiance associée à son observation (et écarter l'hypothèse d'être en présence d'une « Yes machine »), des traitements mineurs d'amélioration des images (transformations de niveaux de signal, quantifications scalaires ou vectorielles, rehaussement de contraste, interpolations, ...), des distorsions optiques mineures (vue à travers des composants optiquement transparents),
- des distorsions mineures de l'image résultant de variations dynamiques ou statiques de l'angle de prise de vue entre l'image d'authentification et l'image de vérification résultant par exemple d'une faible inclinaison du dispositif comme indiqué par les flèches F1 à F3 de la figure 5,
- des effets du bruit d'acquisition (implicite à toute acquisition / ré-acquisition),
- un endommagement mineur subi par la région d'authentification du fait de l'usage (vieillissement, usure, endommagement localisé,...),
- des traitements mineurs de surface de type vernissage, pelliculage,
- sans que cette liste ne soit ni limitative ni exhaustive.

Les motifs de Glass visualisés dans le cadre de l'invention sont d'autant plus observables et présents que la corrélation physique, entre les images d'authentification et de vérification ou entre l'image d'authentification et le sujet candidat ou à authentifier, est importante et varie depuis au moins un point fixe ou quasi-fixe. Cette variation est d'autant plus grande que les détails du domaine des fréquences intermédiaires sont préservés et que leur contraste est élevé. Des prétraitements optiques et\ou numériques d'amélioration de l'image peuvent ainsi lui être appliqués pour une meilleure observation. Ainsi un zoom optique (dispositifs à focales variables) et\ou numérique pour mieux sélectionner l'échelle d'observation, une déconvolution de l'image afin de supprimer un défaut de mise au point ou un bougé, un filtrage passe-bande pour sélectionner \ privilégier les détails de fréquences intermédiaires ou un rehaussement de contraste pour accentuer le contraste peuvent à titre d'exemple être appliqués. Ainsi, afin
de faciliter la visualisation du motif de Glass éventuel, les images d'authentification et de vérification ainsi que l'image de la superposition peuvent préalablement à leur affichage voire à leur enregistrement subir un ou plusieurs traitements d'amélioration tels que par exemple un rehaussement de contraste en particulier par égalisation d'histogramme des niveaux de gris ou des canaux couleur de décomposition ou encore par inversion des échelles de niveaux de gris ou de couleur de décomposition de façon à former une image négative de l'autre (le positif) en vue d'observer une anti-corrélation.

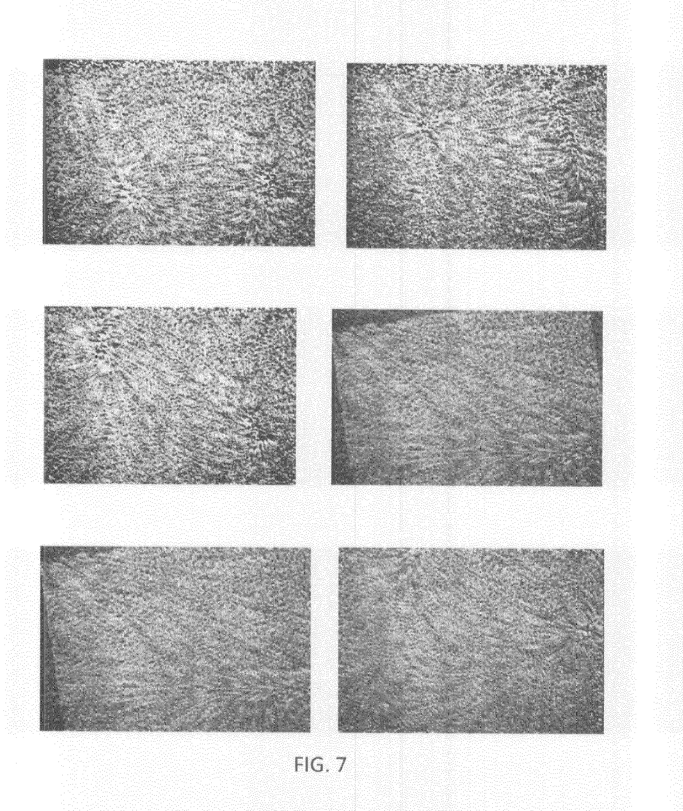

Par ailleurs, le dispositif électronique D peut être adapté pour permettre la superposition en temps réel de l'image d'authentification avec un flux vidéo de vérification, c'est-à-dire une séquence d'images de vérification, de la région d'authentification. Ainsi, les mouvements relatifs du dispositif électronique avec le sujet candidat induisent une variation de l'angle de prise de vue ou plus généralement du point de vue des images de vérification par rapport à l'angle de prise de vue, respectivement au point de vue de l'image d'authentification. Cette variation induit l'apparition de motifs de Glass en cas de superposition d'images de la région d'authentification. A cet égard il doit être remarqué que les motifs de Glass susceptibles d'apparaître n'ont pas nécessairement une conformation spiralée ou circulaire à un seul centre telle qu'elle ressort de la figure 6. Ainsi, la figure 7 montre d'autres formes de motif de Glass étant entendu qu'il ne s'agit pas d'une présentation exhaustive ou limitative des formes des motifs de Glass susceptibles d'apparaitre dans le cadre de l'invention.

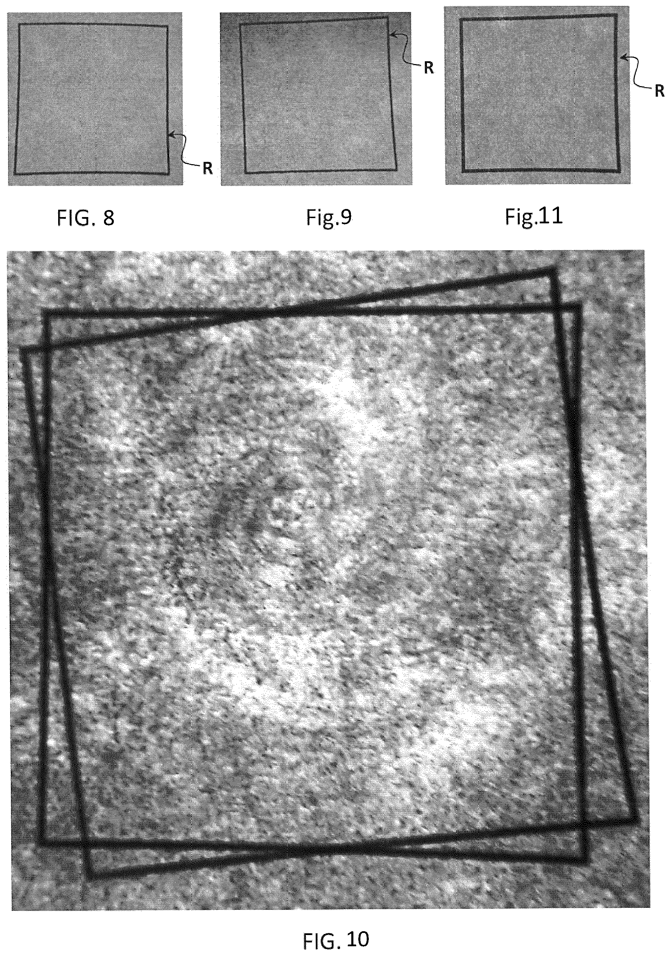

Selon une autre variante de mise en oeuvre de l'invention, par exemple pour authentifier une feuille de papier telle que représentée à la figure 8 formant le sujet authentique, l'image d'authentification est enregistrée sur une pellicule photographique de type inversible pour former une diapositive, illustrée figure 9, à un grandissement sensiblement de 1 d'une région d'authentification R du sujet qui pourra être repérée ou marquée sur la feuille à authentifier.

Lors de la phase de vérification, l'opérateur superpose la diapositive à la région d'authentification de la feuille et observe le résultat de cette superposition en transvision en éclairant l'ensemble par l'arrière comme le montre la figure 10. Si l'opérateur observe un motif de Glass alors il peut conclure à l'authenticité. En revanche si l'observateur n'observe pas de motif de Glass, il réalise un léger déplacement relatif de la diapositive et de la feuille de papier pour procéder à leur recalage. Si au cours du recalage l'observateur perçoit un motif de Glass, il conclut à l'authenticité de la feuille, sinon l'observateur ne peut pas valider l'authenticité du sujet. Il doit être remarqué qu'à moins d'une superposition parfaite, assez difficile à obtenir manuellement, il apparait au moins un début de motif de Glass à la superposition, ce motif pouvant être accentué par le déplacement.

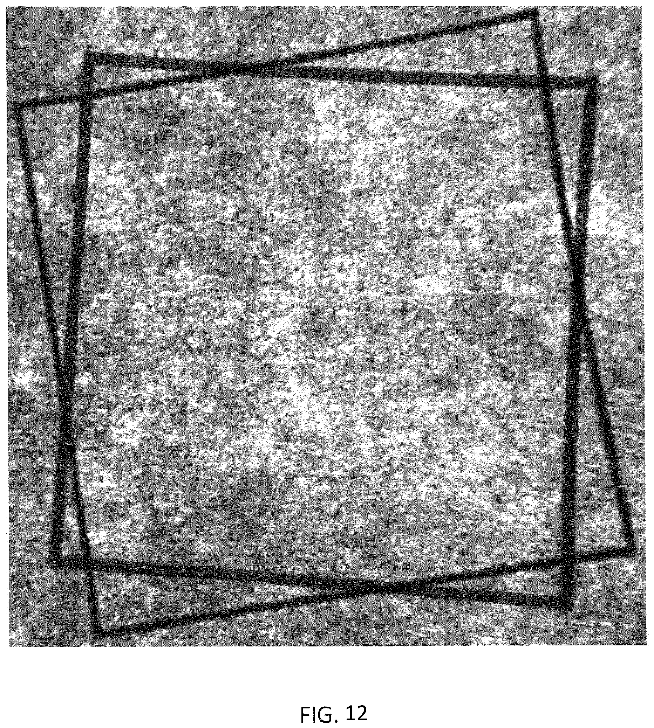

En cas de superposition de l'image d'authentification d'une feuille de papier telle qu'illustrée à la figure 11 qui ne correspond pas à l'image d'authentification de la figure 6, aucun motif de Glass n'est visible comme cela ressort de la figure 12.

Il doit être souligné que la mise en oeuvre du procédé selon l'invention avec une 5 image d'authentification constituée d'une diapositive superposée à une feuille de papier démontre de manière irréfutable que les motifs de Glass peuvent être perçus par la superposition de deux textures naturelles issues d'une acquisition d'une même région d'authentification d'un même sujet matériel. Il pourra en outre être remarqué que les textures des images superposées résultent de structures observées à l'œil nu ou avec un grandissement en général inférieur à x10, de préférence entre x2 et x5 . Il n'est donc pas nécessaire d'utiliser des images de structures submicroniques pour faire apparaître des motifs de type Glass.

Dans les exemples de mise en oeuvre décrit précédemment en relation avec les figures 1 à 12, l'acquisition des images d'authentification et de vérification est effectuée en transmission de la lumière au travers du sujet. Cependant, le procédé selon l'invention peut être mis en oeuvre avec des images d'authentification et de vérification dont l'acquisition est effectuée en réflexion.

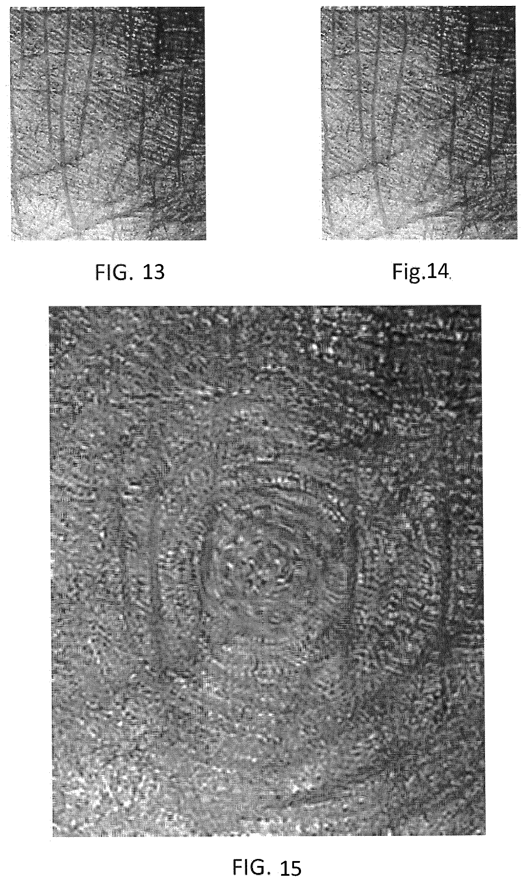

Ainsi, le procédé selon l'invention peut être mis en oeuvre pour procéder à l'authentification d'une paume de main dont il aura tout d'abord été enregistré une image d'authentification telle qu'illustrée à la figure 13. Ultérieurement à cet enregistrement, il est procédé à une vérification de l'authenticité ou à une identification pour laquelle il est procédé à l'acquisition d'une image de vérification telle qu'illustrée à la figure 14. Ensuite, il est procédé à la superposition des deux images comme illustré à la figure 15. Dans la mesure où un motif de Glass peut être observé à la figure 15, il est possible de conclure que la paume de l'image d'authentification de la figure 13 correspond à la paume de l'image de vérification de la figure 14.

L'invention est susceptible de trouver des applications dans différents domaines comme par exemple dans un processus de traçabilité d'une chaîne logistique au sein de laquelle les différents intervenants : producteur, distributeur, revendeur, consommateur sont tous intéressés par le contrôle de l'authenticité avec des moyens financiers et techniques à leur dispositions différents pour assurer ce contrôle. Ainsi, l'invention se révèle particulièrement avantageuse en ce qu'elle offre la possibilité du producteur à la partie aval de la chaîne de distribution et de consommation la possibilité de procéder au contrôle avec des outils simples et sans risque de divulgation de secret de mise en oeuvre comme il en existe dans le cas de l'utilisation de signature numérique extraite de la matière avec des algorithmes complexes dont il faut préserver le secret. Par ailleurs, un producteur titulaire de droits de propriété intellectuelle peut aussi être intéressé par savoir si un produit contrôlé est au bon endroit dans la chaîne logistique (contrôle des marchés parallèles) alors qu'un consommateur se préoccupe d'abord de savoir si le produit en question est bien authentique ou s'intéresse aux services auxquels il peut accéder via un produit authentique. Tout cela peut être mis en oeuvre comme indiqué précédemment avec recours conjoint à un moyen d'authentification unitaire (signature et identifiant) automatique et un moyen d'authentification visuelle objet de cette invention. Un contrôle d'accès peut ainsi être réalisé avec ou sans l'extraction d'une signature.

L'invention peut être mise en oeuvre dans le cadre de diverses applications d'authentification, d'identification, de sérialisation, de contrôle d'intégrité et de cryptographie visuelle. A cet égard, il faut considérer que dans le cadre de l'invention, les termes "authentification", "identification" et "contrôle d'intégrité" peuvent être équivalents en fonction de l'application envisagée.

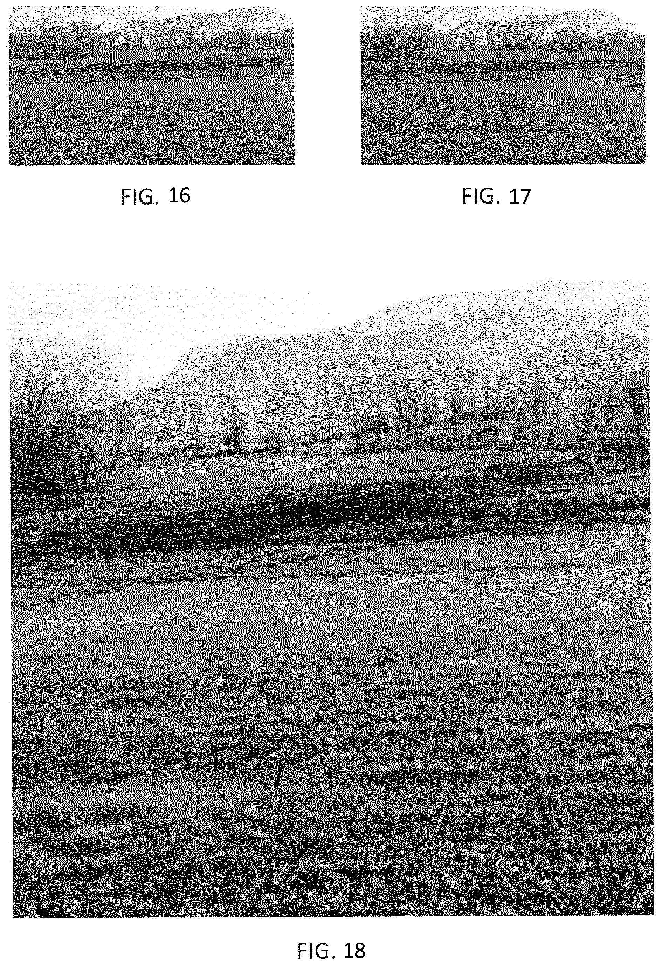

L'invention peut être mise en oeuvre pour identifier une scène naturelle ou un paysage comme le montrent les figures 16 à 18. La figure 16 est une image d'une scène de plaine avec en premier plan une praire et en arrière-plan une montagne. La figure 17 est une image de la même scène avec un angle de prise de vue légèrement différent.

La figure 18 est le résultat de la superposition des deux images avec une légère rotation relative qui permet de faire apparaître un motif de Glass en bas à gauche de l'image. L'apparition de ce motif permet de démontrer la robustesse du procédé selon l'invention aux différences de conditions d'acquisition. De plus, l'apparition du motif de Glass permet de conclure que les deux images correspondent à la même scène naturelle. Ainsi il est possible d'identifier la scène de l'image de la figure 17 à partir de l'image de la figure 16. Cela aurait été également possible si par exemple l'image de la figure 16 n'avait compris qu'une partie de la prairie sans l'arrière-plan de montagne caractéristique. La superposition des deux images aurait permis de déduire que l'image 17 correspondait à une partie de la prairie de l'image 16. Un même principe peut être utilisé pour contrôle l'intégrité d'images ou de séquences d'images d'un film ou d'une vidéo. Par ailleurs, par la mise en oeuvre d'une image de prairie, les inventeurs démontrent encore qu'il n'est pas nécessaire de mettre en oeuvre des structures de taille microscopique ou de très petites tailles pour faire apparaître des motifs de Glass à partir de la matière.

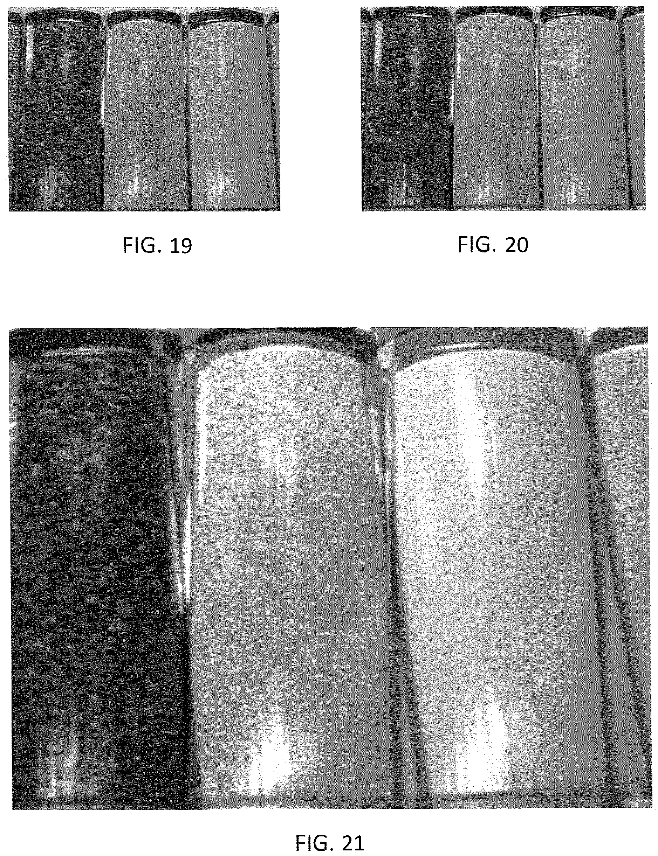

Les figures 19 à 21 illustrent une mise en oeuvre de l'invention pour assurer un contrôle d'intégrité de produits granuleux stockés dans des récipients transparents. L'image de la figure 18 a été prise à un instant Tₒ tandis que l'image de la figure 20 a été prise à un instant T₁ avec un angle de prise de vue légèrement différent de celui la figure19. La superposition des images 19 et 20 avec une légère rotation relative fait apparaître un motif de Glass comme cela ressort de la figure 21. L'apparition de ce motif de Glass permet de conclure qu'il s'agit bien des mêmes récipients. De plus, l'apparition du motif de Glass permet de conclure que le contenu des récipients sur lesquels le motif de Glass est visible n'a pas était déplacé ou mécaniquement affecté ce qui permet également de conclure à l'intégrité de ce contenu.

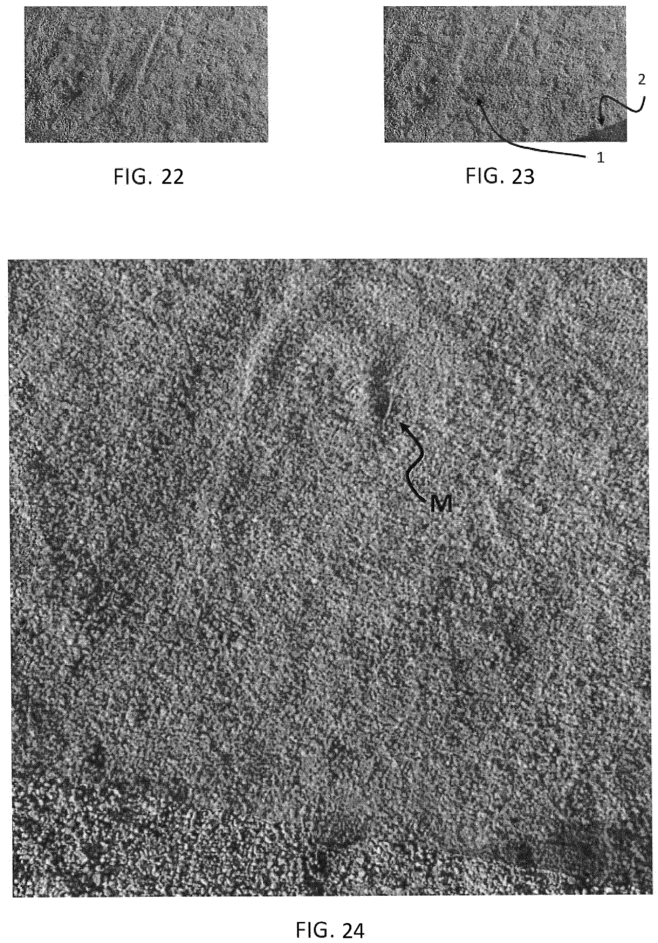

Les figures 22 à 24 illustrent une mise en oeuvre de l'invention pour assurer une authentification ou une identification d'une surface de sable visualisée à deux instants différents et ayant été en partie modifiée. Ainsi, la figure 22 est une image de la surface de sable dans un état initial tandis que la figure 23 est une image de la même surface acquise après altération de cette surface par une marque 2 faite avec un bâton. L'image de la figure 23 diffère de celle de la figure 22 par la présence d'une ombre 3 et par une légère différence d'angle de prise de vue. La superposition, de ces deux images avec une légère rotation relative fait apparaître un motif de Glass M comme cela ressort de la figure 24. La visualisation de ce motif de Glass permet de conclure qu'il s'agit bien de la même surface de sable donc du même endroit. De plus, l'observation du motif de Glass démontre que le procédé selon l'invention est résistant aux altérations partielles du sujet authentique et robuste en ce qui concerne les variations des conditions d'acquisition des images d'authentification et de vérification.

II peut en outre être remarqué que des motifs de Glass ne sont pas observables dans la zone de l'image correspondant à la partie altérée de la surface ou de la région d'authentification. Ainsi, l'invention peut être mise en oeuvre pour contrôler l'intégrité de la région d'authentification dans la mesure où ; là où le motif de Glass est visible ; il est possible de conclure la région d'authentification est intègre ou n'a pas été altérée depuis l'acquisition de l'image d'authentification.

Ainsi, le procédé selon l'invention permet de contrôler l'intégrité de la surface d'un sujet. A cet effet, il est effectué une série d'image d'authentification de manière à couvrir la surface dont l'intégrité doit être vérifiée. La série d'images d'authentification est en enregistrée dans le cadre de la phase d'enregistrement. Lors de la phase d'authentification, correspondant dans le cas présent à un contrôle d'intégrité, il est réalisé une série d'images de vérification de la surface dont l'intégrité doit être vérifiée de manière à la couvrir. Ensuite, chaque image d'authentification d'une région de la surface est superposée avec une image de vérification de la même région de la surface pour en cas de visualisation d'un motif de Glass conclure à l'intégrité de la région correspondante, le doute sur l'intégrité subsistant dans les régions où le motif n'apparaît pas.

Selon une autre variante de l'invention, le procédé d'authentification visuelle met en oeuvre de la cryptographie visuelle. Il est à noter que cette variante peut selon sa mise en oeuvre être assimilée à un procédé de cryptographie visuelle pure. Typiquement le choix d'une rotation à appliquer localement au sein d'une grille à bords épais sur l'image d'authentification peut être fait en guise de transformation géométrique résiduelle, accompagnée d'une inversion des niveaux de gris afin d'améliorer le contraste du message lors de la superposition.

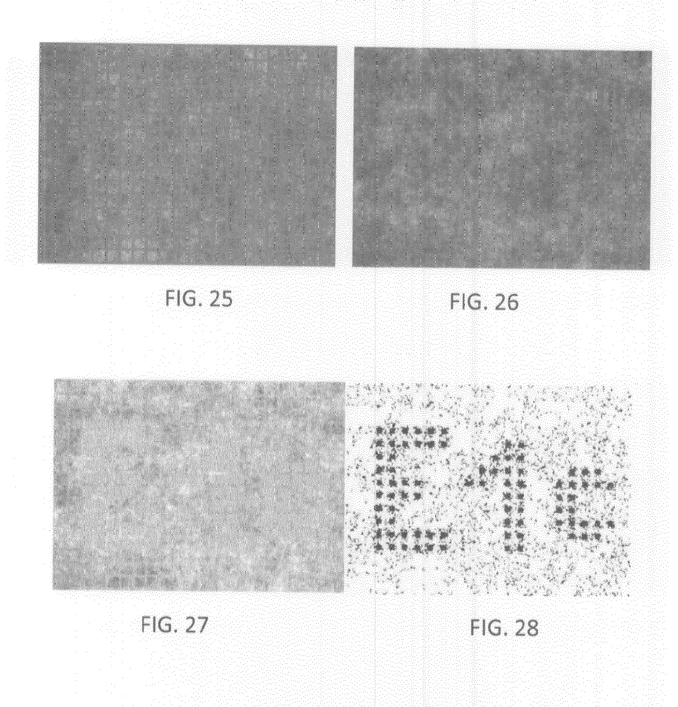

Dans ce contexte, il est une image d'authentification d'une feuille de papier qui est enregistrée après l'avoir masquée selon une matrice ou une grille de cellules dont la surface interne est formée par la partie correspondante de l'image d'authentification et qui sont séparés par un bords épais indépendant destiné à briser la continuité de l'image pour éviter toute détection de la transformation géométrique appliquée au sein de chaque cellules dont le choix dépend d'un bit aléatoire et le cas échéant du bit correspondant de l'image-message ici supposée binaire à transmettre, comme cela ressort de la figure 25. Dans le cas présent les cellules transformées subissent une rotation de quelques degrés autour de leur centre ou isobarycentre. L'image d'authentification telle qu'illustrée figure 25 est alors enregistrée. Il est possible de remarquer qu'aucun message n'est visible sur la figure 25. Lorsqu'une lecture du message caché dans la figure 25 est souhaité il est utilisé une image de vérification, telle qu'illustrée figure 26, qui correspondant à une image de la même région d'authentification que celle utilisée pour la réalisation de l'image d'authentification.

L'image de vérification (Fig.26) est alors superposée à l'image d'authentification (Fig.28) et il est ainsi obtenu l'image de la figure 27 où il est possible de lire le message E1c. Afin de faciliter la lecture, l'image de la superposition peut subir un traitement d'amélioration tel qu'une transformation d'histogramme qui permet d'obtenir l'image illustrée figure 28 sur laquelle le message est davantage contrasté

Bien entendu, diverses autres variantes du procédé selon l'invention peuvent être envisagées dans le cadre des revendications indépendantes.

## Revendications

1. Procédé visuel d'authentification et/ou de contrôle d'intégrité de sujets authentiques comprenant les étapes suivantes :
- sélection d'au moins un sujet authentique parmi des sujets matériels présentant chacun au moins une région d'authentification présentant, dans des conditions d'observation données, une structure matérielle intrinsèque non aisément reproductible et correspondant à une texture observable par un observateur possédant une acuité visuelle moyenne et n'ayant fait l'objet d'aucune adjonction à la région d'authentification d'une structure dont l'unique fonction serait de générer un motif de Glass par superposition d'images de cette structure particulière,
- dans une phase d'enregistrement :
- acquisition d'au moins une image dite d'authentification de chaque sujet authentique comprenant au moins la région d'authentification, l'acquisition étant réalisée à un grossissement ou grandissement d'acquisition donné dans des conditions données de telle manière que, pour un observateur possédant une acuité visuelle moyenne, l'image de la région d'authentification présente au moins une texture à composante aléatoire continue, le grandissement ou le grossissement d'acquisition permettant la superposition de l'image d'acquisition et du sujet candidat, à une même échelle,
- enregistrement de l'image d'authentification,
- dans une phase de vérification visuelle : superposition au moins partielle de chaque image d'authentification et de la région d'authentification d'un sujet candidat et réalisation d'une transformation géométrique résiduelle non nulle au moins locale de l'image d'authentification et/ou d'un déplacement relatif non nul de l'image d'authentification par rapport au sujet candidat puis superposition pour permettre l'observation, sur l'image résultant de la superposition après la transformation géométrique et/ou le déplacement, d'un phénomène optique de type motif de Glass, lorsque le sujet candidat est le sujet authentique correspondant à l'image d'authentification, le déplacement étant de faible amplitude vis-vis-à-vis du déplacement maximal causé par la transformation géométrique résiduelle.

2. Procédé selon la revendication 1, **caractérisé en ce que** l'image d'authentification est projetée sur le sujet candidat.

3. Procédé selon l'une des revendications précédentes, **caractérisé en ce que** la région d'authentification est au moins translucide et **en ce que** la phase de vérification est effectuée en transvision.

4. Procédé selon l'une des revendications précédentes, **caractérisé en ce que** la phase de vérification est effectuée au moyen d'un dispositif électronique comprenant au moins des moyens d'affichage adaptés pour afficher ou projeter l'image d'authentification et pour permettre la superposition du sujet candidat et de l'image d'authentification sensiblement à l'échelle du sujet candidat.

5. Procédé visuel d'authentification et/ou de contrôle d'intégrité de sujets authentiques comprenant les étapes suivantes :
- sélection d'au moins un sujet authentique parmi des sujets matériels comprenant chacun au moins une région dite d'authentification présentant, dans des conditions d'observation données, une structure intrinsèque non aisément reproductible et correspondant à une texture observable par un observateur possédant une acuité visuelle moyenne et n'ayant fait l'objet d'aucune adjonction d'une structure dont l'unique fonction serait de générer un motif de Glass par superposition d'images de cette structure particulière,
- dans une phase d'enregistrement :
- acquisition d'au moins une image dite d'authentification du sujet authentique comprenant au moins la région d'authentification, l'acquisition étant réalisée à un grossissement ou grandissement d'acquisition tels que pour un observateur possédant une acuité visuelle moyenne l'image de la région d'authentification présente une texture à composante aléatoire continue,
- enregistrement de l'image d'authentification,
- dans une phase de vérification visuelle:
- acquisition d'au moins une image de vérification d'un sujet candidat comprenant au moins une partie de la région d'authentification, l'acquisition étant réalisée à un grossissement ou grandissement permettant une visualisation des images d'authentification et de vérification à une même échelle,
- superposition au moins partielle des images d'authentification et de vérification sensiblement à une même échelle et réalisation d'une transformation géométrique résiduelle non nulle au moins locale d'au moins une image des images superposées et/ou d'un déplacement relatif non nul des images superposées pour permettre l'observation, sur l'image résultant de la superposition après la transformation géométrique et/ou le déplacement, d'un phénomène optique de type motif de Glass lorsque le sujet candidat est le sujet authentique correspondant à l'image d'authentification, le déplacement étant de faible amplitude vis-vis-à-vis du déplacement maximal causé par la transformation géométrique résiduelle.

6. Procédé selon la revendication précédente **caractérisé en ce que** la phase de vérification est effectuée au moyen d'un dispositif électronique comprenant au moins :
- des moyens d'acquisition adaptés pour acquérir au moins une image de vérification,
- des moyens d'affichage adaptés pour afficher sur un écran de visualisation l'image de vérification et pour permettre la superposition des images de vérification et d'authentification sensiblement à une même échelle.

7. Procédé selon la revendication précédente **caractérisé en ce que** le dispositif électronique est adapté pour assurer un affichage d'une séquence ou série d'images de vérification résultant d'un déplacement relatif des moyens d'acquisition et du sujet candidat et pour permettre la superposition des images de vérification avec l'image d'authentification.

8. Procédé selon la revendication 7 ou 8, **caractérisé en ce que** le dispositif électronique comprend des moyens de traitement adaptés pour réaliser une transformation géométrique au moins locale d'au moins une image des images superposées et/ou un déplacement relatif des images superposées.

9. Procédé selon l'une des revendications 7 à 9, **caractérisé en ce qu'**au moins une image de vérification est enregistrée sous forme numérique.

10. Procédé selon l'une des revendications 7 à 10, **caractérisé en ce que** l'image de vérification est visualisée et/ou enregistrée en niveau de gris ou en demi-tons.

11. Procédé selon l'une des revendications 7 à 11, **caractérisé en ce qu'**il comprend en outre une phase de vérification automatique qui est effectuée en partie au moins par le dispositif électronique et qui comprend une étape de calcul d'un coefficient de similarité entre une image de vérification et l'image d'authentification pour si, le coefficient de similarité est supérieur à un seuil donné, conclure à une forte probabilité d'authenticité voire à une authenticité et dans le cas contraire ne pas conclure à l'authenticité.

12. Procédé selon la revendication précédente, **caractérisé en ce que** le calcul du coefficient de similarité est effectué à partir de signatures extraites d'une image de vérification et de l'image d'authentification.

13. Procédé selon la revendication 12 ou 13, **caractérisé en ce que** la phase de vérification automatique comprend une étape de transmission ou communication du résultat de la vérification automatique à un tiers ou à un utilisateur du dispositif électronique.

## Patentansprüche

1. Visuelles Verfahren zum Authentifizieren und/oder Überprüfen der Integrität von authentischen Subjekten, umfassend die folgenden Schritte:
- Auswählen von mindestens einem authentischen Subjekt aus materiellen Subjekten, die jeweils mindestens einen Authentifizierungsbereich aufweisen, der unter gegebenen Betrachtungsbedingungen eine eigene materielle Struktur aufweist, die nicht ohne Weiteres reproduzierbar ist, und einer von einem Betrachter betrachtbaren Textur entspricht, der eine mittlere Sehschärfe besitzt, und wobei dem Authentifizierungsbereich keine Struktur hinzugefügt wurde, deren einzige Funktion darin bestehen würde, ein Glass-Motiv durch Überlagern von Bildern dieser spezifischen Struktur zu erzeugen,
- in einer Aufzeichnungsphase:
- Erfassen mindestens eines als Authentifizierungsbild bezeichneten Bildes von jedem authentischen Subjekt, umfassend mindestens den Authentifizierungsbereich, wobei das Erfassen mit einer gegebenen Erfassungsvergrößerung oder -ausdehnung unter gegebenen Umständen derart durchgeführt wird, dass für einen Betrachter, der eine mittlere Sehschärfe besitzt, das Bild des Authentifizierungsbereichs mindestens eine Textur mit einer kontinuierlichen zufälligen Komponente aufweist, wobei die Erfassungsvergrößerung oder -ausdehnung die Überlagerung des Erfassungsbildes und des Kandidatensubjekts in einem gleichen Maßstab ermöglicht,
- Aufzeichnen des Authentifizierungsbildes,
- in einer visuellen Verifizierungsphase: mindestens teilweises Überlagern eines jeden Authentifizierungsbildes und des Authentifizierungsbereichs eines Kandidatensubjekts und Durchführen einer mindestens lokalen restlichen geometrischen Transformation ungleich null des Authentifizierungsbildes und/oder einer relativen Verlagerung ungleich null des Authentifizierungsbildes in Bezug auf das Kandidatensubjekt, dann Überlagern, um das Betrachten auf dem sich aus der Überlagerung nach der geometrischen Transformation und/oder der Verlagerung ergebenden Bild eines optischen Phänomens vom Typ Glass-Motiv zu ermöglichen, wenn das Kandidatensubjekt das authentische Subjekt entsprechend dem Authentifizierungsbild ist, wobei die Verlagerung von einer geringen Amplitude gegenüber der maximalen Verlagerung ist, die durch die restliche geometrische Transformation bewirkt wird.

2. Verfahren nach Anspruch 1, **dadurch gekennzeichnet, dass** das Authentifizierungsbild auf das Kandidatensubjekt projiziert wird.

3. Verfahren nach einem der vorhergehenden Ansprüche, **dadurch gekennzeichnet, dass** der Authentifizierungsbereich mindestens durchscheinend ist und dass die Verifizierungsphase durch Durchsicht erfolgt.

4. Verfahren nach einem der vorhergehenden Ansprüche, **dadurch gekennzeichnet, dass** die Verifizierungsphase mittels einer elektronischen Vorrichtung erfolgt, umfassend mindestens Anzeigemittel, die dazu geeignet sind, das Authentifizierungsbild anzuzeigen oder zu projizieren und die Überlagerung des Kandidatensubjekts und des Authentifizierungsbildes im Wesentlichen im Maßstab des Kandidatensubjekts zu ermöglichen.

5. Visuelles Verfahren zum Authentifizieren und/oder Überprüfen der Integrität von authentischen Subjekten, umfassend die folgenden Schritte:
- Auswählen von mindestens einem authentischen Subjekt aus materiellen Subjekten, die jeweils mindestens einen als Authentifizierungsbereich bezeichneten Bereich umfassen, der unter gegebenen Betrachtungsbedingungen eine eigene Struktur aufweist, die nicht ohne Weiteres reproduzierbar ist, und einer von einem Betrachter betrachtbaren Textur entspricht, der eine mittlere Sehschärfe besitzt, und dem keine Struktur hinzugefügt wurde, deren einzige Funktion darin bestehen würde, durch Überlagern von Bildern dieser spezifischen Struktur ein Glass-Motiv zu erzeugen,
- in einer Aufzeichnungsphase:
- Erfassen mindestens eines als Authentifizierungsbild bezeichneten Bildes des authentischen Subjekts, umfassend mindestens den Authentifizierungsbereich, wobei das Erfassen mit einer Erfassungsvergrößerung oder -ausdehnung derart durchgeführt wird, dass für einen Betrachter, der eine mittlere Sehschärfe besitzt, das Bild des Authentifizierungsbereichs eine Textur mit einer kontinuierlichen zufälligen Komponente aufweist,
- Aufzeichnen des Authentifizierungsbildes,
- in einer visuellen Verifizierungsphase:
- Erfassen mindestens eines Verifizierungsbildes eines Kandidatensubjekts, umfassend mindestens einen Teil des Authentifizierungsbereichs, wobei das Erfassen mit einer Vergrößerung oder Ausdehnung durchgeführt wird, die eine Visualisierung der Authentifizierungs- und Verifizierungsbilder in einem gleichen Maßstab ermöglicht,
- mindestens teilweises Überlagern der Authentifizierungs- und Verifizierungsbilder im Wesentlichen in einem gleichen Maßstab und Durchführen einer mindestens lokalen restlichen geometrischen Transformation ungleich null mindestens eines Bildes der überlagerten Bilder und/oder einer relativen Verlagerung ungleich null der überlagerten Bilder, um das Betrachten auf dem sich aus der Überlagerung nach der geometrischen Transformation und/oder der Verlagerung ergebenden Bild eines optischen Phänomens vom Typ Glass-Motiv zu ermöglichen, wenn das Kandidatensubjekt das authentische Subjekt ist, das dem Authentifizierungsbild entspricht, wobei die Verlagerung von einer geringen Amplitude gegenüber der maximalen Verlagerung ist, die durch die restliche geometrische Transformation bewirkt wird.

6. Verfahren nach dem vorhergehenden Anspruch, **dadurch gekennzeichnet, dass** die Verifizierungsphase mittels einer elektronischen Vorrichtung erfolgt, umfassend mindestens:
- Erfassungsmittel, die dazu geeignet sind, mindestens ein Verifizierungsbild zu erfassen,
- Anzeigemittel, die dazu geeignet sind, auf einem Visualisierungsbildschirm das Verifizierungsbild anzuzeigen und die Überlagerung der Verifizierungs- und Authentifizierungsbilder im Wesentlichen in einem gleichen Maßstab zu ermöglichen.

7. Verfahren nach dem vorhergehenden Anspruch, **dadurch gekennzeichnet, dass** die elektronische Vorrichtung dazu geeignet ist, eine Anzeige einer Sequenz oder Reihe von Verifizierungsbildern, die sich aus einer relativen Verlagerung der Erfassungsmittel und des Kandidatensubjekts ergeben, zu gewährleisten und die Überlagerung der Verifizierungsbilder mit dem Authentifizierungsbild zu ermöglichen.

8. Verfahren nach Anspruch 7 oder 8, **dadurch gekennzeichnet, dass** die elektronische Vorrichtung Verarbeitungsmittel umfasst, die dazu geeignet sind, eine mindestens lokale geometrische Transformation mindestens eines Bildes der überlagerten Bilder und/oder eine relative Verlagerung der überlagerten Bilder durchzuführen.

9. Verfahren nach einem der Ansprüche 7 bis 9, **dadurch gekennzeichnet, dass** mindestens ein Verifizierungsbild in digitaler Form aufgezeichnet wird.

10. Verfahren nach einem der Ansprüche 7 bis 10, **dadurch gekennzeichnet, dass** das Verifizierungsbild in Grau- oder in Halbtönen visualisiert und/oder aufgezeichnet wird.

11. Verfahren nach einem der Ansprüche 7 bis 11, **dadurch gekennzeichnet, dass** es ferner eine automatische Verifizierungsphase umfasst, die mindestens teilweise durch die elektronische Vorrichtung durchgeführt wird und die einen Schritt des Berechnens eines Ähnlichkeitskoeffizienten zwischen einem Verifizierungsbild und dem Authentifizierungsbild umfasst, um, wenn der Ähnlichkeitskoeffizient über einem gegebenen Schwellenwert liegt, auf eine hohe Wahrscheinlichkeit der Authentizität bzw. eine Authentizität zu schließen, und im entgegengesetzten Fall nicht auf die Authentizität zu schließen.

12. Verfahren nach dem vorhergehenden Anspruch, **dadurch gekennzeichnet, dass** das Berechnen des Ähnlichkeitskoeffizienten anhand von Signaturen durchgeführt wird, die aus einem Verifizierungsbild und dem Authentifizierungsbild extrahiert worden sind.

13. Verfahren nach Anspruch 12 oder 13, **dadurch gekennzeichnet, dass** die automatische Verifizierungsphase einen Schritt des Übertragens oder Kommunizierens des Ergebnisses der automatischen Verifizierung an einen Dritten oder an einen Benutzer der elektronischen Vorrichtung umfasst.

## Claims

1. A visual method for authenticating and/or checking the integrity of authentic subjects, comprising the following steps:
- selecting at least one authentic subject from material subjects which each have at least one authentication region which has, under specific observation conditions, an intrinsic material structure which cannot be readily reproduced and which corresponds to a texture which can be observed by an observer having average visual acuity and which is not the subject of any addition to the authentication region of a structure whose unique function would be to generate a Glass pattern by means of superimposition of images of this specific structure,
- in a recording phase:
- acquiring at least one so-called authentication image of each authentic subject comprising at least the authentication region, the acquisition being carried out at a specific acquisition magnification or enlargement under specific conditions so that, for an observer having average visual acuity, the image of the authentication region has at least one texture having a continuous random component, the magnification or the enlargement of the acquisition enabling the superimposition of the acquisition image and the candidate subject at a same scale,
- recording the authentication image,
- in a visual verification phase: at least partially superimposing each authentication image and the authentication region of a candidate subject and carrying out an at least local non-zero residual geometric transformation of the authentication image and/or a non-zero relative displacement of the authentication image relative to the candidate subject then superimposition in order to allow observation, on the resultant image of the superimposition after the geometric transformation and/or the displacement, of an optical phenomenon of the Glass pattern type, when the candidate subject is the authentic subject corresponding to the authentication image, the displacement being of low amplitude with respect to the maximum displacement caused by the residual geometric transformation.

2. The method according to claim 1, **characterised in that** the authentication image is projected onto the candidate subject.

3. The method according to any one of the preceding claims, **characterised in that** the authentication region is at least translucent and **in that** the verification phase is carried out using transparency.

4. The method according to any one of the preceding claims, **characterised in that** the verification phase is carried out by means of an electronic device which comprises at least display means which are capable of displaying or projecting the authentication image and of enabling the superposition of the candidate subject and the authentication image substantially at the scale of the candidate subject.

5. A visual method for authenticating and/or checking the integrity of authentic subjects comprising the following steps:
- selecting at least one authentic subject from material subjects which each comprise at least one so-called authentication region which has, under specific observation conditions, an intrinsic structure which cannot be readily reproduced and which corresponds to a texture which can be observed by an observer having average visual acuity and which is not the subject of any addition of a structure whose unique function would be to generate a Glass pattern by means of superimposition of images of this specific structure,
- in a recording phase:
- acquiring at least one so-called authentication image of the authentic subject comprising at least the authentication region, the acquisition being carried out at an acquisition magnification or enlargement so that, for an observer having average visual acuity, the image of the authentication region has a texture having a continuous random component,
- recording the authentication image,
- in a visual verification phase:
- acquiring at least one verification image of a candidate subject comprising at least a portion of the authentication region, the acquisition being carried out at a magnification or enlargement which enables authentication and verification images to be displayed at a same scale,
- at least partially superimposing the authentication and verification images substantially at a same scale and carrying out an at least local non-zero residual geometric transformation of at least one image from the superimposed images and/or a non-zero relative displacement of the superimposed images in order to allow observation, on the resultant image of the superimposition after the geometric transformation and/or the displacement, of an optical phenomenon of the Glass pattern type when the candidate subject is the authentic subject corresponding to the authentication image, the displacement being of low amplitude with respect to the maximum displacement caused by the residual geometric transformation.

6. The method according to the preceding claim, **characterised in that** the verification phase is carried out by means of an electronic device comprising at least:
- acquisition means which are capable of acquiring at least one verification image,
- display means which are capable of displaying the verification image on a display screen and of enabling the verification and authentication images to be superimposed substantially at a same scale.

7. The method according to the preceding claim, **characterised in that** the electronic device is capable of ensuring a display of a sequence or a series of verification images resulting from a relative displacement of the acquisition means and the candidate subject and enabling the superimposition of the verification images with the authentication image.

8. The method according to claim 7 or 8, **characterised in that** the electronic device comprises processing means which are capable of carrying out an at least local geometric transformation of at least one image from the superimposed images and/or a relative displacement of the superimposed images.

9. The method according to any one of claims 7 to 9, **characterised in that** at least one verification image is recorded in digital form.

10. The method according to any one of claims 7 to 10, **characterised in that** the verification image is displayed and/or recorded in greyscale or in semi-tones.

11. The method according to any one of claims 7 to 11, **characterised in that** it further comprises an automatic verification phase which is carried out at least partially by the electronic device and which comprises a step of calculation of a similarity coefficient between a verification image and the authentication image in order, if the similarity coefficient is greater than a given threshold, to conclude a high level of probability of authenticity or an authenticity and otherwise not to conclude the authenticity.

12. The method according to the preceding claim, **characterised in that** the calculation of the similarity coefficient is carried out on the basis of signatures extracted from a verification image and the authentication image.

13. The method according to claim 12 or 13, **characterised in that** the automatic verification phase comprises a step of transmission or communication of the result of the automatic verification to a third party or a user of the electronic device.
